# EUROPEAN PATENT APPLICATION

(11) **EP 3 725 498 A1**
(43) Date of publication of application: **21.10.2020**
(21) Application number: 20163121.5
(22) Date of filing: 13.03.2020
(51) Int. Cl.: B29C 64/264, B29C 64/165, B29C 64/291, B29C 64/282, B33Y 10/00, B33Y 30/00

(54) **THREE-DIMENSIONAL OBJECT PRODUCING APPARATUS AND THREE-DIMENSIONAL OBJECT PRODUCING METHOD**

(30) Priority: 20.03.2019 JP 2019052753; 20.03.2019 JP 2019053521
(71) Applicant: Ricoh Company, Ltd., Tokyo 143-8555 (JP)
(72) Inventor: YAMAGUCHI, Daichi, Tokyo, 143-8555 (JP); TAKIMOTO, Koji, Tokyo, 143-8555 (JP); NISHIO, Takuei, Tokyo, 143-8555 (JP); NAKAZAWA, Souichi, Tokyo, 143-8555 (JP); MIYATA, Hiroyuki, Tokyo, 143-8555 (JP)
(74) Representative: J A Kemp LLP

(57) **Abstract**

Provided is a three-dimensional object producing apparatus including: a powder layer forming unit configured to form a powder layer (31); a radiant energy absorbent applying unit (50) configured to apply a radiant energy absorbent over the powder layer (31); and a radiant energy applying unit (80) configured to apply radiant energy to the powder layer (31) over which the radiant energy absorbent is applied.

## Description

### BACKGROUND OF THE INVENTION

### Field of the Invention

The present disclosure relates to a three-dimensional object producing apparatus and a three-dimensional object producing method.

### Description of the Related Art

Known among three-dimensional object producing methods by powder additive manufacturing (powder additive manufacturing methods) is a method of discharging a solution for forming an object containing a radiant energy absorbent to an object forming region of a surface of a powder layer, and applying radiant energy to fuse powder particles containing resin particles with each other, to form a three-dimensional object.

Such an object producing method is one of high speed sintering (HSS) methods. Various proposals have been made on devices configured to apply radiant energy in the HSS methods.

For example, a proposed device includes a plurality of lamps and a plurality of reflectors covering the plurality of lamps in order to be capable of applying radiant energy close to Gaussian distribution (for example, see International Publication No. WO 2017/197015).

In addition, for example, a proposed method performs a preparatory fusing process on a sinterable material using radiant energy of a first amount, and then performs a fusing process of completely fusing the sinterable material using radiant energy of a second amount higher than the radiant energy of the first amount (for example, see Japanese Translation of PCT International Application Publication No. JP-T-2018-502752).

The present disclosure has an object to provide a three-dimensional object producing apparatus capable of improving energy efficiency and forming a three-dimensional object accurately using a material having a high melting point.

The present disclosure also has an object to provide a three-dimensional object producing apparatus capable of suppressing occurrence of warpage of a three-dimensional object.

### SUMMARY OF THE INVENTION

According to one aspect of the present disclosure, a three-dimensional object producing apparatus includes a powder layer forming unit configured to form a powder layer, a radiant energy absorbent applying unit configured to apply a radiant energy absorbent over the powder layer, and a radiant energy applying unit configured to apply radiant energy to the powder layer over which the radiant energy absorbent is applied.

The present disclosure can provide a three-dimensional object producing apparatus capable of improving energy efficiency and forming a three-dimensional object accurately using a material having a high melting point.

The present disclosure can also provide a three-dimensional object producing apparatus capable of suppressing occurrence of warpage of a three-dimensional object.

### BRIEF DESCRIPTION OF THE DRAWINGS

FIG. 1 is a plan view illustrating a three-dimensional object producing apparatus of an embodiment 1-1;
FIG. 2 is a side view illustrating a three-dimensional object producing apparatus of an embodiment 1-1;
FIG. 3 is a cross-sectional view illustrating a three-dimensional object producing apparatus of an embodiment 1-1;
FIG. 4 is a block diagram of a controlling section of a three-dimensional object producing apparatus of an embodiment 1-1;
FIG. 5A is a schematic view illustrating an operation of a three-dimensional object producing apparatus of an embodiment 1-1;
FIG. 5B is a schematic view illustrating an operation of a three-dimensional object producing apparatus of an embodiment 1-1;
FIG. 5C is a schematic view illustrating an operation of a three-dimensional object producing apparatus of an embodiment 1-1;
FIG. 5D is a schematic view illustrating an operation of a three-dimensional object producing apparatus of an embodiment 1-1;
FIG. 5E is a schematic view illustrating an operation of a three-dimensional object producing apparatus of an embodiment 1-1;
FIG. 5F is a schematic view illustrating an operation of a three-dimensional object producing apparatus of an embodiment 1-1;
FIG. 6 is a schematic view of a radiant energy source of a three-dimensional object producing apparatus of an embodiment 1-1;
FIG. 7 is a schematic view illustrating a radiant energy source of an embodiment 1-2;
FIG. 8 is a schematic view illustrating a radiant energy source of an embodiment 1-3;
FIG. 9 is a schematic view illustrating a radiant energy source of an embodiment 1-4;
FIG. 10 is a schematic view illustrating a radiant energy source of an embodiment 1-5;
FIG, 11A is a graph plotting temperature elevation speed in Example 1;
FIG. 11B is a graph plotting temperature elevation speed in Example 2;
FIG. 11C is a graph plotting temperature elevation speed in Comparative Example 1;
FIG. 12A is a graph plotting a relationship between energy needed for temperature elevation in Examples 1 and 2 and Comparative Example 1 and energy density;
FIG. 12B is a graph plotting a relationship between temperature elevation time and energy density based on Examples and Comparative Examples;
FIG. 13A is an enlarged image of a three-dimensional object of Example 1;
FIG. 13B is an enlarged image of a three-dimensional object of Comparative Example 1;
FIG. 14 is a schematic view of a radiant energy source of Comparative Example;
FIG. 15A is a view illustrating a heat dissipating state when radiant energy is made incident to a powder layer in Example;
FIG. 15B is a view illustrating a heat dissipating state when radiant energy is made incident to a powder layer in Comparative Example;
FIG. 16A is a diagram illustrating an irradiance when radiant energy is made incident to a powder layer in Example;
FIG. 16B is a diagram illustrating an irradiance when radiant energy is made incident to a powder layer in Comparative Example;
FIG. 17A is a view illustrating an example process of irradiating a powder layer permeated by an object forming liquid with radiant energy to fuse the powder layer;
FIG. 17B is a view illustrating an example process of irradiating a powder layer permeated by an object forming liquid with radiant energy to fuse the powder layer;
FIG. 17C is a view illustrating an example process of irradiating a powder layer permeated by an object forming liquid with radiant energy to fuse the powder layer;
FIG. 17D is a view illustrating an example process of irradiating a powder layer permeated by an object forming liquid with radiant energy to fuse the powder layer;
FIG. 17E is a view illustrating an example process of irradiating a powder layer permeated by an object forming liquid with radiant energy to fuse the powder layer;
FIG. 17F is a view illustrating an example process of irradiating a powder layer permeated by an object forming liquid with radiant energy to fuse the powder layer;
FIG. 18 is a graph plotting an example relationship between an irradiation energy density with which a powder layer is irradiated and temperature profiles of an upper surface and a lower surface of the powder layer according to an existing technique;
FIG. 19 is a schematic view illustrating an operation of a three-dimensional object producing apparatus of an embodiment 2-1;
FIG. 20 is a graph plotting an example relationship between an irradiation energy density with which a powder layer is irradiated and temperature profiles of an upper surface and a lower surface of the powder layer according to an embodiment 2-1;
FIG. 21 is a graph plotting an example relationship between energy applied to a powder layer and temperature of the powder layer;
FIG. 22 is a graph plotting an example of temperature elevation speed;
FIG. 23 is a schematic view illustrating a modified example of a radiant energy source of an embodiment 2-1;
FIG. 24A is a schematic view illustrating another modified example of a radiant energy source of an embodiment 2- 1;
FIG. 24B is a schematic view illustrating another modified example of a radiant energy source of an embodiment 2- 1;
FIG. 25A is a schematic view illustrating another modified example of a radiant energy source of an embodiment 2- 1;
FIG. 25B is a schematic view illustrating another modified example of a radiant energy source of an embodiment 2- 1;
FIG. 26 is a schematic view illustrating a modified example of a radiant energy absorbent applying unit and a radiant energy source of an embodiment 2-1;
FIG. 27A is a schematic view illustrating a radiant energy source of an embodiment 2-2;
FIG. 27B is a schematic view illustrating a radiant energy source of an embodiment 2-2;
FIG. 28A is a schematic view illustrating a radiant energy source of an embodiment 2-3;
FIG. 28B is a schematic view illustrating a radiant energy source of an embodiment 2-3;
FIG. 28C is a schematic view illustrating a radiant energy source of an embodiment 2-3;
FIG. 29A is a schematic view illustrating a radiant energy source of an embodiment 2-4;
FIG. 29B is a schematic view illustrating a radiant energy source of an embodiment 2-4;
FIG. 30 is a schematic view illustrating a first radiant energy source of an embodiment 2-5;
FIG. 31A is a schematic view illustrating an example of a radiant energy source including a light source and a reflector;
FIG. 31B is a schematic view illustrating a first radiant energy source of an embodiment 2-6;
FIG. 31C is a schematic view illustrating a modified example of a first radiant energy source of an embodiment 2-6;
FIG. 32 is a schematic view illustrating a radiant energy source of an embodiment 2-7;
FIG. 33 is a schematic view illustrating a radiant energy source of an embodiment 2-8:
FIG. 34 is a schematic view illustrating a radiant energy absorbent applying unit and a radiant energy source of an embodiment 2-9;
FIG. 35A is a schematic view illustrating a radiant energy absorbent applying unit and a radiant energy source of an embodiment 2-10;
FIG. 35B is a schematic view illustrating a radiant energy absorbent applying unit and a radiant energy source of an embodiment 2-10;
FIG. 35C is a graph plotting an example of relative energy with respect to wavelength of radiant energy; and
FIG. 36 is a flowchart illustrating an example procedure of an energy radiation program for producing a three-dimensional object of the present disclosure.

### DESCRIPTION OF THE EMBODIMENTS

### (Three-dimensional object producing apparatus and three-dimensional object producing method)

A three-dimensional object producing apparatus of the present disclosure includes a powder layer forming unit configured to form a powder layer, a radiant energy absorbent applying unit configured to apply a radiant energy absorbent over the powder layer, and a radiant energy applying unit configured to apply radiant energy to the powder layer over which the radiant energy absorbent is applied, and further includes other units as needed.

A three-dimensional object producing method of the present disclosure includes a powder layer forming step of forming a powder layer, a radiant energy absorbent applying step of applying a radiant energy absorbent over the powder layer, and a radiant energy applying step of applying radiant energy to the powder layer over which the radiant energy absorbent is applied, and further includes other steps as needed.

The three-dimensional object producing method of the present disclosure can be suitably performed by the three-dimensional object producing apparatus of the present disclosure. The powder layer forming step can be suitably performed by the powder layer forming unit. The radiant energy absorbent applying step can be suitably performed by the radiant energy absorbent applying unit. The radiant energy applying step can be suitably performed by the radiant energy applying unit.

That is, the three-dimensional object producing method of the present disclosure is the same as using and working the three-dimensional object producing apparatus of the present disclosure. The three-dimensional object producing apparatus of the present disclosure is the same as performing the three-dimensional object producing method of the present disclosure.

Hence, the details of the three-dimensional object producing method of the present disclosure will also be specified through description of the three-dimensional object producing apparatus of the present disclosure.

### <Powder layer forming unit and powder layer forming step>

The powder layer forming unit is a unit configured to form a powder layer.

The powder layer forming step is a step of forming a powder layer.

The powder layer forming unit is not particularly limited and may be appropriately selected depending on the intended purpose. Examples of the powder layer forming unit include a combination of a mechanism configured to supply a powder and a mechanism configured to form a powder layer while leveling off the supplied powder.

### <<Powder layer>>

A powder layer means a layer formed of a powder.

The average thickness of a powder layer is not particularly limited, may be appropriately selected depending on the intended purpose, and is preferably 10 micrometers or greater but 100 micrometers or less.

### - Powder-

The powder is not particularly limited and may be appropriately selected depending on the intended purpose so long as the powder has a form of powder or particles.

The material used in a powder layer, i.e., the material of the powder is not particularly limited and may be appropriately selected depending on the intended purpose. Examples of the material of the powder include a material containing resin particles and further containing other materials as needed.

The resin particles refer to particles containing a resin component. In the following description, the resin particles may be referred to as "resin powder". The resin particles may contain any other components as needed in addition to the resin component.

The resin component is not particularly limited and may be appropriately selected depending on the intended purpose. A thermoplastic resin is preferable.

A thermoplastic resin refers to a resin that plasticizes and melts when heat is applied to the resin.

The thermoplastic resin is not particularly limited and may be appropriately selected depending on the intended purpose. Examples of the thermoplastic resin include crystalline resins, non-crystalline resins, and liquid crystal resins. A crystalline resin is preferable as the thermoplastic resin. A resin having a great difference between the melting start temperature and the recrystallizing temperature during cooling is preferable as the thermoplastic resin.

The crystalline resin refers to a resin having a detectable melting point peak in a measurement according to ISO3146 (Testing Methods for Transition Temperatures of Plastics, JIS K7121).

Examples of the thermoplastic resin include polyolefins, polyamides, polyesters, polyethers, polyphenylene sulfides, polyacetals (POM: Polyoxymethylene), polyimides, and fluororesins. One of these thermoplastic resins may be used alone or two or more of these thermoplastic resins may be used in combination.

Examples of polyolefins include polyethylene (PE) and polypropylene (PP).

Examples of polyamides include: polyamide 410 (PA410), polyamide 6 (PA6), polyamide 66 (PA66), polyamide 610 (PA610), polyamide 612 (PA612), polyamide 11 (PA11), and polyamide 12 (PA12); and semi-aromatic polyamides such as polyamide 4T (PA4T), polyamide MXD6 (PAMXD6), polyamide 6T (PA6T), polyamide 9T (PA9T), and polyamide 10T (PA10T).

Examples of polyesters include polyethylene terephthalate (PET), polybutadiene terephthalate (PBT), and polylactic acid (PLA). Among these polyesters, polyesters containing aromatic series that partially contain terephthalic acid or isophthalic acid are preferable in terms of imparting heat resistance.

Examples of polyethers include polyaryl ketone and polyether sulfone.

Examples of polyaryl ketone include polyether ether ketone (PEEK, with a melting point of 340 degrees C), polyether ketone (PEK, with a melting point of 370 degrees C), polyether ketone ketone (PEKK, with a melting point of 400 degrees C), polyaryl ether ketone (PAEK, with a melting point of 340 degrees C), polyether ether ketone ketone (PEEKK, with a melting point of 320 degrees C), and polyether ketone ether ketone ketone (PEKEKK, with a melting point of 380 degrees C).

The thermoplastic resin may be a thermoplastic resin having two melting point peaks such as PA9T. The thermoplastic resin having two melting point peaks completely melts when the temperature becomes higher than or equal to the higher melting point peak.

For example, polyphthalamide (with a melting point of 310 degrees C), polyphenylene sulfide (with a melting point of 280 degrees C), polysulfone (with a melting point of 190 degrees C), polyether sulfone (with a melting point of 220 degrees C), polyetherimide (with a melting point of 220 degrees C), polyamideimide (with a melting point of 300 degrees C), polyether ether ketone (with a melting point of 340 degrees C), and polytetrafluoroethylene (with a melting point of 330 degrees C) are referred to as "super engineering plastics".

Examples of the non-crystalline resins include polyvinyl chloride, polystyrene, AS resins, ABS resins, methacrylic resins, polymethyl methacrylate resins (PMMA), polycarbonates (PC), polyphenylene ethers, polyallylates, polystyrenes (PS), polysulfones, polyether sulfones, polyetherimdes, and polyamideimides. Unlike the crystalline resins, these resins do not have a constant melting point, but have a melting temperature range. For example, PCs melt in a range of from about 100 degrees C through about 400 degrees C, although depending on the method of producing the PCs.

The thermoplastic resin is preferably at least one selected from super engineering plastics. A thermoplastic resin that is a super engineering plastic is advantageous in that tensile strength, heat resistance, chemical resistance, and flame retardancy of a three-dimensional object to be produced can be improved and the three-dimensional object can be used for industrial purposes.

Specifically, it is preferable to select the material used in a powder layer from a group consisting of ABS, PC, PMMA, PS, PEEK, PTFE, PAI, PEI, PES, PSU, PEK, PAEK, PEKK, PEEKK, and PEKEKK.

The melting point of the material used in a powder layer is not particularly limited and may be appropriately selected depending on the intended purpose. When the melting point of the material is 200 degrees C or higher, the present disclosure can be more effective. When the melting point of the material used in a powder layer is 200 degrees C or higher, there is an advantage that tensile strength, heat resistance, chemical resistance, and flame retardancy of a three-dimensional object to be produced can be improved, but existing techniques have not been able to realize production of objects.

The material used in a powder layer is not particularly limited and may be appropriately selected depending on the intended purpose. A material having a heat resistance is preferable.

Whether the material used in a powder layer has heat resistance can be measured based on deflection temperature under load, and Vicat softening point.

When the powder layer forming unit forms a powder layer, it is preferable to preheat the powder such that the temperature of the powder previously becomes a desired temperature. This makes it possible to save radiant energy of the radiant energy applying unit taken for temperature elevation to the melting point of the powder and to save the time taken for irradiation of radiant energy.

The preheating temperature is not particularly limited, may be appropriately selected depending on the intended purpose, and is preferably a temperature between the recrystallizing temperature and the melting temperature of the resin particles contained in the powder. With the preheating temperature set to a temperature between the recrystallizing temperature and the melting temperature of the resin particles, it is possible to suppress occurrence of, for example, warpage in a three-dimensional object produced, while also maintaining fluidity of the powder during formation of a powder layer.

A unit configured to preheat the powder is not particularly limited and may be appropriately selected depending on the intended purpose. Examples of the unit that can be used include known heaters, ceramic heaters, halogen lamps, heating lamps, and heating rollers.

### <Radiant energy absorbent applying unit and radiant energy absorbent applying step>

The radiant energy absorbent applying unit is a unit configured to apply a radiant energy absorbent over a powder layer.

The radiant energy absorbent applying step is a step of applying a radiant energy absorbent over a powder layer.

The radiant energy is not particularly limited and may be appropriately selected depending on the intended purpose. Examples of the radiant energy include electromagnetic waves such as light and radio waves.

The radiant energy absorbent applying unit is not particularly limited and may be appropriately selected depending on the intended purpose. Examples of the radiant energy absorbent applying unit include an inkjet head configured to discharge an object forming liquid containing a radiant energy absorbent, and discharging nozzles.

### -Object forming liquid-

An object forming liquid contains the radiant energy absorbent, and contains a liquid component because the object forming liquid is liquid at normal temperature. The object forming liquid may further contain other components as needed.

### --Radiant energy absorbent--

The radiant energy absorbent is not particularly limited and may be appropriately selected depending on the intended purpose so long as the radiant energy absorbent absorbs radiant energy.

The liquid component is not particularly limited and may be appropriately selected depending on the intended purpose. Water and water-soluble solvents are suitably used, and particularly water is used as a main component.

The ratio of the water in the whole object forming liquid is not particularly limited, may be appropriately selected depending on the intended purpose, and is preferably 40% by mass or greater but 85% by mass or less and more preferably 50% by mass or greater but 80% by mass or less. When the ratio of the water in the whole object forming liquid is in the preferable range, it is possible to suppress drying of nozzles during a standby state, and to reduce occurrence of clogging with liquids and nozzle discharging failure when the radiant energy absorbent applying unit is an inkjet head.

Particularly when inkjet nozzles are used to discharge the object forming liquid, the water-soluble solvent is effective for improving water retention and discharging stability. Degradation of water retention and discharging stability may cause nozzle drying, unstable discharging, or clogging with liquids. This may degrade the strength and dimensional accuracy of a three-dimensional object. In this regard, water-soluble solvents are effective because many water-soluble solvents have viscosities or boiling points higher than water and can serve particularly as a humectant, an anti-drying agent, or a viscosity modifier of the object forming liquid.

The water-soluble solvent is not particularly limited and appropriately changed so long as the water-soluble solvent is a liquid material having water solubility. Examples of the water-soluble solvent include: alcohols such as ethanol, propanol, and butanol; ethers; and ketones. Specific examples of the water-soluble solvent include 1,2,6-hexanetriol, 1,2-butanediol, 1,2-hexanediol, 2-pentanediol, 1,3-dimethyl-2-imidazolidinone, 1,3-butanediol, 1,3-propanediol, 1,4-butanediol, 1,5-pentanediol, 1,6-hexanediol, 2,2-dimethyl-1,3-propanediol, 2,3-butanediol, 2,4-pentanediol, 2,5-hexanediol, 2-ethyl-1,3-hexanediol, 2-pyrrolidone, 2-methyl-1,3-propanediol, 2-methyl-2,4-pentanediol, 3-methyl-1,3-butanediol, 3-methyl-1,3-hexanediol, N-methyl-2-pyrrolidone, N-methylpyrrolidinone, β-butoxy-N,N-dimethylpropionamide, β-methoxy-N,N-dimethylpropionamide, γ-butyrolactone, ε-caprolactam, ethylene glycol, ethylene glycol-n-butylether, ethylene glycol-n-propylether, ethylene glycol phenylether, ethylene glycol mono-2-ethylhexylether, ethylene glycol monoethylether, glycerin, diethylene glycol, diethylene glycol-n-hexylether, diethylene glycol methylether, diethylene glycol monoethylether, diethylene glycol monobutylether, diethylene glycol monomethylether, diglycerin, dipropylene glycol, dipropylene glycol n-propylether, dipropylene glycol monomethylether, dimethylsufoxide, sulfolane, thiodiglycol, tetraethylene glycol, triethylene glycol, triethylene glycol ethylether, triethylene glycol dimethylether, triethylene glycol monobutylether, triethylene glycol methylether, tripropylene glycol, tripropylene glycol-n-propylether, tripropylene glycol methylether, trimethylolethane, trimethylolpropane, propylpropylene diglycol, propylene glycol, propylene glycol-n-butylether, propylene glycol-t-butylether, propylene glycol phenylether, propylene glycol monoethylether, hexylene glycol, polyethylene glycol, and polypropylene glycol.

The ratio of the water-soluble solvent in the whole object forming liquid is not particularly limited, may be appropriately changed, and is preferably 5% by mass or greater but 60% by mass or less, more preferably 10% by mass or greater but 50% by mass or less, and yet more preferably 15% by mass or greater but 40% by mass or less. When the ratio of the water-soluble solvent in the whole object forming liquid is 5% by mass or greater, the object forming liquid can have a preferable water retention, and can be suppressed from drying within an inkjet head during a standby state to cause discharging failure. Furthermore, it is possible to prevent the discharging amount from being varied between during a previous check and during an actual discharge, making it easier to obtain a three-dimensional object having a desired strength and a desired shape. When the ratio of the water-soluble solvent in the whole object forming liquid is 60% by mas or less, the object forming liquid can be prevented from being extremely thickened, and can have a better discharging stability. Furthermore, it is possible to suppress degradation of solubility of the resin particles of the powder, making degradation of the strength of a three-dimensional object less likely. Moreover, an extremely long time is not taken to dry a three-dimensional object, making it possible to suppress degradation of productivity and deformation of a three-dimensional object.

As the other components of the object forming liquid, known materials such as a humectant, an anti-drying agent, a viscosity modifier, a surfactant, a penetrant, a crosslinking agent, a defoamant, a pH adjustor, an antiseptic, a fungicide, a colorant, a preservative, and a stabilizer can be added without limitation.

As the radiant energy absorbent, an appropriately synthesized product or a commercially available product may be used.

Examples of the commercially available product include CM997A (available from Hewlett-Packard Company), which is an ink-type compound containing carbon black. Such a compound may also contain KHP, bone char, graphite, carbon fiber, chalk, or an interference pigment. Moreover, such a compound may also contain an infrared absorbent, a near-infrared absorbent, a visible light absorbent, or a UV light absorbent. For example, examples of inks containing a visible light enhancer include dye-base colored inks and pigment-base colored inks, such as the inks known as CM993A and CE042A both available from Hewlett-Packard Company.

One of these radiant energy absorbents may be used alone or two or more of these radiant energy absorbents may be used in combination.

### [Method for preparing object forming liquid]

The method for preparing the object forming liquid is not particularly limited and may be appropriately selected depending on the intended purpose. Examples of the method include a method of adding the radiant energy absorbent, and as needed, the other components in the liquid component such as water and the water-soluble solvent, and mixing and stirring the resultant.

### [Example action between powder and object forming liquid]

As an action between the powder and the object forming liquid, when the powder and the object forming liquid described above are used to form a powder layer with the powder, apply the object forming liquid containing the radiant energy absorbent to the powder layer, and apply radiant energy to the powder layer, the powder particles fuse with each other to form an object forming layer.

### <Radiant energy applying unit and radiant energy applying step>

The radiant energy applying unit is a unit configured to apply radiant energy to a powder layer over which the radiant energy absorbent is applied.

The radiant energy applying step is a step of applying radiant energy to a powder layer over which the radiant energy absorbent is applied.

Examples of the radiant energy applying unit include the first embodiment and the second embodiment described below.

### <First embodiment>

The radiant energy applying unit of the first embodiment is configured to apply radiant energy having an energy density of 0.1 W/mm² or higher to a powder layer over which the radiant energy absorbent is applied.

The radiant energy applying unit of the first embodiment is based on a finding that it may be difficult to produce objects with existing techniques, when, for example, materials having high melting points such as super engineering plastics and amorphous resins are used.

Existing three-dimensional object producing apparatuses have been able to make an energy density distribution a Gaussian distribution, but this has not succeeded in remarkably increasing the energy density.

For example, assume a case where a powder formed of a material having a high melting point is elevated in temperature taking a long time using radiant energy having a low energy density as in existing three-dimensional object producing apparatuses, and the powder to which the radiant energy is applied adjoins a powder in a non-object forming region, which is a region that does not constitute a three-dimensional object. In this case, the radiant energy applied with a long time taken is likely to be dissipated to the adjoining powder, making powder particles in the non-object forming region unnecessarily fuse with each other, leading to the problem of degrading the object formation accuracy of a three-dimensional object. Moreover, because the energy is also likely to be dissipated to the adjoining powder and to the air, there may be a case where powder particles in the object forming region do not fuse with each other sufficiently, to degrade the strength of a three-dimensional object.

There is a case of preheating the powder in order that powder particles formed of a material having a high melting point can easily fuse with each other when radiant energy is applied. Even in this case, it may be difficult to produce a three-dimensional object.

For example, assume a case where a powder having a high melting point is preheated at 150 degrees C, an inkjet head is used as the radiant energy absorbent applying unit to discharge an object forming solution containing the radiant energy absorbent, and a halogen lamp is used as the radiant energy applying unit to apply radiant energy. In this case, if the inkjet head moves about 1 mm above the preheated powder, the object forming solution contained in the inkjet head is dried and cannot be discharged.

Hence, the radiant energy applying unit of the first embodiment includes a powder layer forming unit configured to form a powder layer, a radiant energy absorbent applying unit configured to apply the radiant energy absorbent over the powder layer, and a radiant energy applying unit configured to apply radiant energy having an energy density of 0.1 W/mm² or higher to the powder layer over which the radiant energy absorbent is applied.

In this way, the radiant energy applying unit of the first embodiment applies radiant energy having a high density in a short time, in order not to spare time for heat to be dissipated from the powder to which the energy is applied. This makes it possible to improve the energy efficiency and form a three-dimensional object highly accurately using a material having a high melting point.

When the energy density is lower than 0.1 W/mm², time is spared for heat to be dissipated from the powder to which the radiant energy is applied, making it difficult to improve the energy efficiency.

Further, because radiant energy applied with a long time taken is likely to be dissipated to an adjoining powder, there is a case where powder particles in a non-object forming region unnecessarily fuse with each other, to degrade the object formation accuracy of a three-dimensional object.

The radiant energy is not particularly limited and may be appropriately selected depending on the intended purpose so long as the radiant energy is 0.1 W/mm² or higher, but is preferably 0.3 W/mm² or higher. When the radiant energy is 0.3 W/mm² or higher, there is an advantage that a temperature elevation time can be sufficiently saved.

### <Second embodiment>

The radiant energy applying unit of the second embodiment is configured to apply a first radiant energy having a first energy density to the powder layer over which the radiant energy absorbent is applied, and subsequently apply a second radiant energy having a second energy density lower than the first energy density to the powder layer.

The radiant energy applying unit of the second embodiment is based on a finding that existing techniques may cause warpage in a three-dimensional object produced.

Specifically, existing three-dimensional object producing apparatuses can fuse a sinterable material of a three-dimensional object, but when lowering the temperature of the sinterable material afterwards, causes the upper surface side of the sinterable material to be lowered in temperature at a higher speed because the upper surface side is exposed to the atmosphere. On the other hand, because the lower surface side of the sinterable material is covered with the powder and lowered in temperature at a lower speed than the upper surface side, the upper surface side from which heat is likely to be dissipated to the air shrinks faster than the lower surface side. This may cause the powder layer to warp, and consequently cause the three-dimensional object on the whole to warp.

Accordingly, the three-dimensional object producing apparatus of the present disclosure is configured to apply a second radiant energy having a second energy density lower than a first energy density to a powder layer, when lowering the temperature of the powder layer after melting the powder layer by applying a first radiant energy having the first energy density. By subsequently applying the second radiant energy to the powder layer after applying the first radiant energy, the three-dimensional object producing apparatus of the present disclosure is configured to compensate for heat dissipation from the upper surface side of the powder layer during temperature lowering, and make the degree of heat dissipation from the lower surface side meet. In this way, the three-dimensional object producing apparatus of the present disclosure can prevent warpage of each powder layer by reducing temperature variation within the powder layer, making it possible to suppress occurrence of warpage in a three-dimensional object.

It is preferable that the radiant energy applying unit include a first radiant energy source configured to apply a first radiant energy having a first energy density to a powder layer, and a second radiant energy source configured to apply a second radiant energy having a second energy density lower than the first energy density to the powder layer. Separately providing a radiant energy source configured to apply the first radiant energy to a powder layer and a radiant energy source configured to apply the second radiant energy to the powder layer is advantageous because a time lag tends not to occur when switching the energy densities.

It is preferable that the radiant energy applying unit include the first radiant energy source and the second radiant energy source in this order in a scanning direction of the radiant energy applying unit. This makes it possible to do with only scanning the radiant energy applying unit, in order for the second radiant energy having the second energy density lower than the first energy density to be applied to the powder layer after the first radiant energy having the first energy density is applied to the powder layer.

It is preferable that the radiant energy applying unit of another embodiment include a first radiant energy source, a second radiant energy source, and a first radiant energy source in this order in the scanning direction of the radiant energy applying unit, to enable scanning toward one side in the scanning direction and scanning toward a side opposite to the one side. Hence, in the scanning toward one side, by performing scanning with the first radiant energy source at the preceding stage with respect to the one side and the second radiant energy source turned ON, the radiant energy applying unit can apply the first radiant energy having a first energy density to a powder layer, and can subsequently apply the second radiant energy having a second energy density lower than the first energy density to the powder layer.

Further, a radiant energy applying unit of a yet another embodiment may include a second radiant energy source, a first radiant energy source, a first radiant energy source, and a second radiant energy source in this order in the scanning direction of the radiant energy applying unit. In this case, it is preferable that the radiant energy absorbent applying unit be provided between the two second radiant energy sources, to enable scanning toward one side in the scanning direction and scanning toward a side opposite to the one side. Hence, immediately after the radiant energy absorbent applying unit applies the radiant energy absorbent to a powder layer, the first radiant energy having a first energy density can be applied to the powder layer and subsequently the second radiant energy having a second energy density lower than the first energy density can be applied to the powder layer.

### <<First energy density>>

The first energy density is not particularly limited, may be appropriately selected depending on the intended purpose so long as the first energy density is an energy density that can fuse the material of a powder layer, and is preferably 0.2 W/mm² or higher but 10 W/mm² or lower.

### <<Second energy density>>

The second energy density is not particularly limited, may be appropriately selected depending on the intended purpose so long as the second energy density is lower than the first energy density, and is preferably 0.015X or greater but 0.750X or less when the first energy density is X (W/mm²). Specifically, the second energy density is preferably 0.15 W/mm² or lower. When the second energy density is in the preferable range, there is an advantage that a three-dimensional object tends not to be warped.

It is preferable to set the second energy density based on the specific heat of the material of a powder layer. This enables the radiant energy applying unit to apply the second radiant energy having the second energy density to a powder layer without excess and deficiency.

It is preferable that the second energy density be capable of maintaining the material of a powder layer at a temperature higher than the melting point of the material of the powder layer.

The radiant energy applying unit is not particularly limited and may be appropriately selected depending on the intended purpose. Examples of the radiant energy applying unit include a light irradiation unit, a microwave irradiation unit configured to emit microwaves, and an electron beam irradiation unit configured to emit electron beams. Among these units, a light irradiation unit is preferable in terms of energy efficiency.

The light irradiation unit is not particularly limited and may be appropriately selected depending on the intended purpose. It is preferable that the light irradiation unit include a light source and a reflector configured to reflect light emitted by the light source.

The light source is not particularly limited and may be appropriately selected depending on the intended purpose. Examples of the light source include a spherical lamp and a rod lamp.

The spherical lamp is not particularly limited and may be appropriately selected depending on the intended purpose. Examples of the spherical lamp include a lamp having a shape of a light bulb.

The rod lamp is not particularly limited and may be appropriately selected depending on the intended purpose. Examples of the rod lamp include a lamp having a shape of a fluorescent lamp.

The spherical lamp and the rod lamp are not particularly limited and may be appropriately selected depending on the intended purpose. Examples of the spherical lamp and the rod lamp include a halogen lamp, a LED, a LD, a flash lamp, and a xenon lamp. Among these lamps, a halogen lamp is preferable in terms of cost and heat resistance.

The reflector is not particularly limited and may be appropriately selected depending on the intended purpose so long as the reflector can reflect light emitted by the light source. It is preferable that the reflector be able to reflect light emitted by the light source in a certain direction. A reflector of the preferable embodiment is advantageous because light emitted by the light source can be condensed to have a higher energy.

Further, it is preferable that there be two or more light condensing regions to which light is condensed by the reflector, that one of the light condensing regions have a smaller area than another one of the light condensing regions, and that the one light condensing region be a region to which the first radiant energy is applied and the another light condensing region be a region to which the second radiant energy is applied. This makes it possible to apply the first radiant energy and the second radiant energy without using two or more light sources.

Examples of the shape of the reflector include an approximately dome-like shape having an opening at one end, and a shape having an approximately rectangular parallelepiped-shaped opening at one end. One of these reflectors may be used alone or two or more of these reflectors may be used in combination. Among these reflectors, a reflector that can reflect light emitted by the light source in one direction is preferable because the radiant energy density can be increased.

The structure, size, and material of the reflector are not particularly limited and may be appropriately selected depending on the intended purpose.

A preferable combination of the light source and the reflector is a combination of a light source, which is a spherical lamp, and a reflector, which has an approximately dome-like shape having an opening at one end, the spherical lamp being provided within the region of the opening. This enables an area, which is to be irradiated with light from the spherical lamp within a powder layer to which the radiant energy absorbent is applied, to be smaller than the area of the opening of the reflector having an approximately dome-like shape, making it possible to increase the energy density.

Another preferable combination of the light source and the reflector is a combination of a light source, which is a rod lamp, and a reflector, which has a shape having an approximately rectangular parallelepiped-shaped opening at one end, wherein the reflector has a peak at a position opposite to the opening, the peak being parallel with the longer dimension of the approximately rectangular parallelepiped, wherein the reflector has an approximately dome-like cross-sectional shape in a direction orthogonal to the longer dimension of the approximately rectangular parallelepiped, and wherein the rod lamp is provided within the region of the opening. This enables an area, which is to be irradiated with light from the rod lamp within a powder layer to which the radiant energy absorbent is applied, to be smaller than the area of the opening of the reflector having an approximately dome-like cross-sectional shape in the direction orthogonal to the longer dimension, making it possible to increase the energy density.

### <Other units>

The other units are not particularly limited and may be appropriately selected depending on the intended purpose.

A plurality of embodiments of the three-dimensional object producing apparatus of the present disclosure will be described with reference to the drawings.

The same components will be denoted by the same reference numerals throughout the drawings, and a redundant description may be skipped. For example, the number, position, and shape of the components are not limited to as specified in the present embodiments, but may be, for example, any number, position, and shape that are suitable to work the present disclosure.

### (Embodiment 1-1)

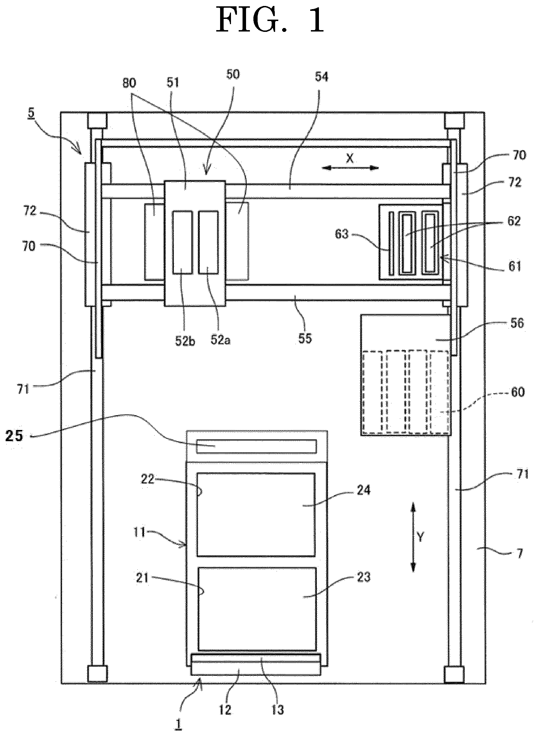

The three-dimensional object producing apparatus of an embodiment 1-1 will be described with reference to FIG. 1 to FIG. 6.

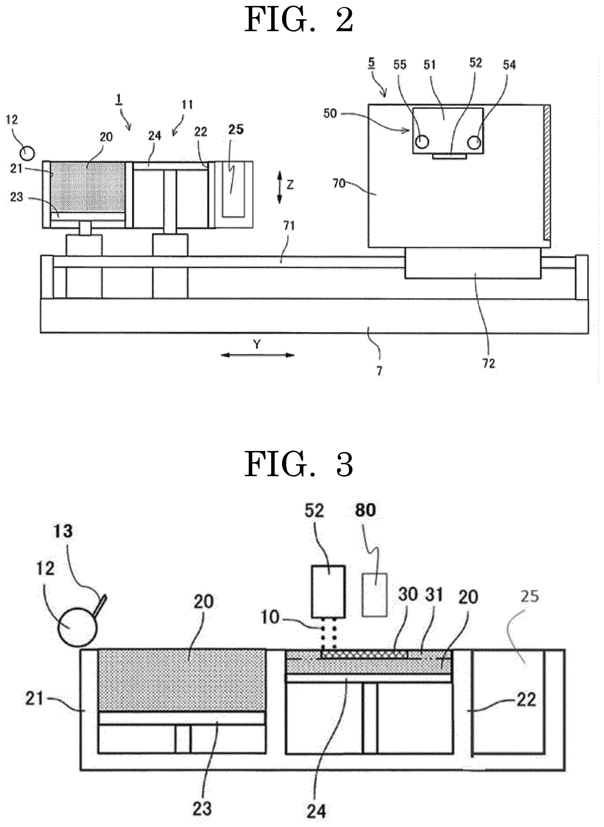

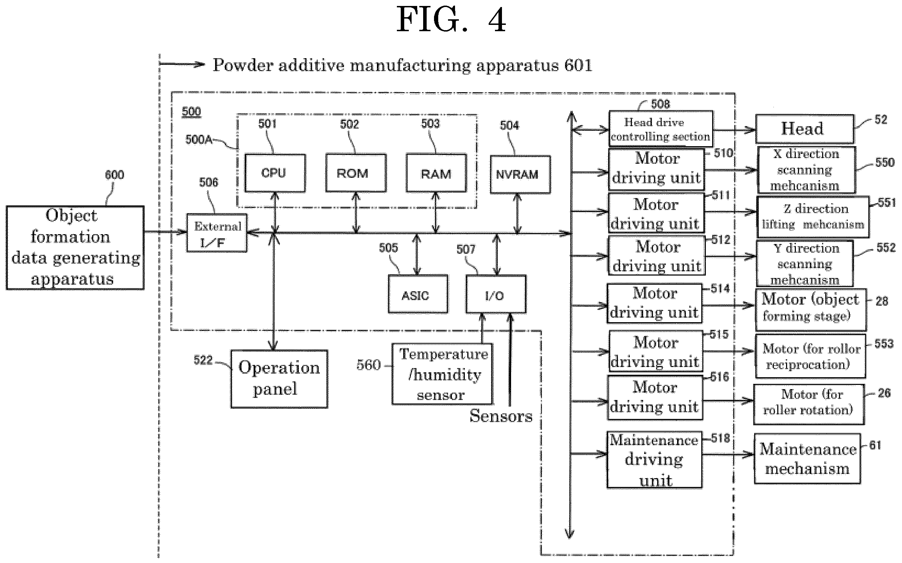

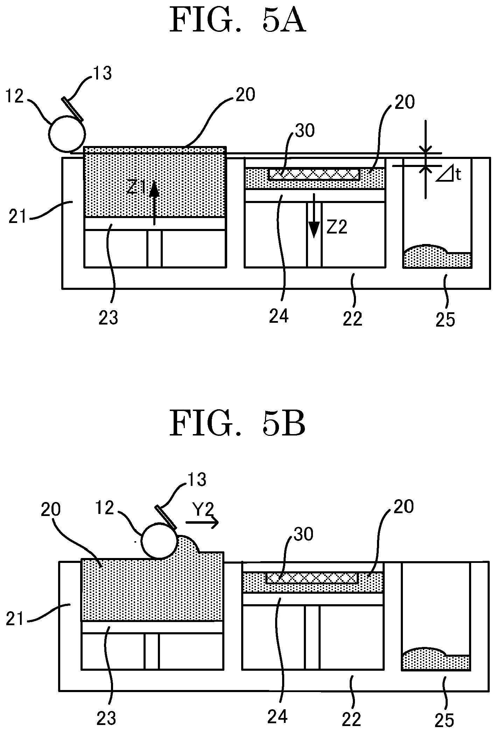

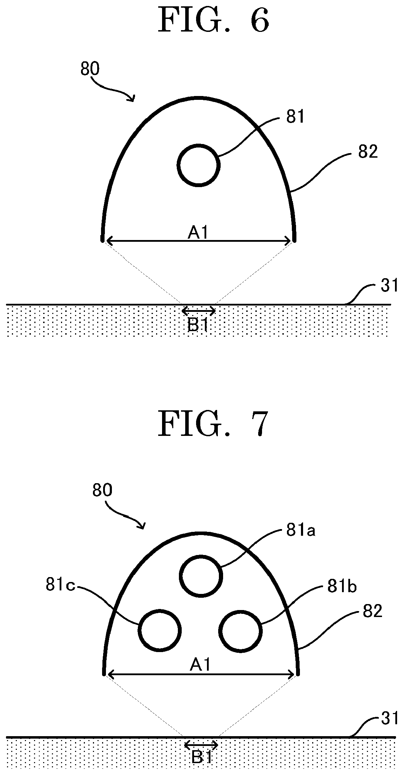

FIG. 1 is a plan view illustrating the three-dimensional object producing apparatus of the embodiment 1-1. FIG. 2 is a side view illustrating the three-dimensional object producing apparatus of the embodiment 1-1. FIG. 3 is a cross-sectional view illustrating the three-dimensional object producing apparatus of the embodiment 1-1. FIG. 4 is a block diagram of a controlling section of the three-dimensional object producing apparatus of the embodiment 1-1. FIG. 5A to FIG. 5F are schematic views illustrating the operation of the three-dimensional object producing apparatus of the embodiment 1-1. FIG. 6 is a schematic view of the radiant energy source of the three-dimensional object producing apparatus of the embodiment 1-1.

The three-dimensional object producing apparatus of the present embodiment is a powder additive manufacturing apparatus, and includes and an object forming section 1 in which an object forming layer 30, which is a layered object formed through binding of a powder 20, is formed, and an object forming unit 5 configured to discharge liquid droplets 10 of the object forming liquid to a powder layer 31 densely laid in a layer form in the object forming section 1, and apply the liquid droplets 10 over the powder layer 31, to form a three-dimensional object.

The object forming section 1 includes, for example, a powder tank 11 and a flattening roller 12 as a rotating body serving as a flattening member (recoater). The flattening member may be, for example, a plate-shaped member (blade) instead of a rotating body.

The powder tank 11 includes a supplying tank 21 configured to supply a powder 20, and an object forming tank 22 in which object forming layers 30 are laminated to form a three-dimensional object. Before object formation, the powder is supplied to the supplying tank 21.

As a supplying stage 23, the bottom of the supplying tank 21 is liftable upward and downward in the vertical direction (height direction). Likewise, as an object forming stage 24, the bottom of the object forming tank 22 is liftable upward and downward in the vertical direction (height direction). Object forming layers 30 are additively manufactured over the object forming stage 24 as a three-dimensional object.

The supplying stage 23 and the object forming stage 24 are lifted upward and downward in the direction of the arrow Z (height direction) by means of a motor.

The flattening roller 12 is configured to supply the powder 20, which has been supplied onto the supplying stage 23 of the supplying tank 21, to the object forming tank 22, and level off and flatten the surface of the layer of the supplied powder 20 as a flattening member, to form a powder layer 31. The flattening roller 12 is disposed reciprocably relative to the stage surface of the object forming stage 24 (stage surface: a surface over which the powder 20 is placed) in the direction of the arrow Y along the stage surface, and is moved by means of a reciprocating mechanism. The flattening roller 12 is driven to rotate by means of a motor 26 (see FIG. 4).

The object forming unit 5 includes a liquid discharging unit 50 configured to discharge liquid droplets 10 to the powder layer 31 over the object forming stage 24. The liquid discharging unit 50 includes a carriage 51, and two (may be one or three or more) liquid discharging heads (hereinafter, referred to simply as "heads") 52a and 52b as discharging units mounted on the carriage 51.

The carriage 51 is movably held on guide members 54 and 55. The guide members 54 and 55 are liftably held on side panels 70 and 70 on both sides. The carriage 51 is reciprocated in the main scanning direction, which is the direction of the arrow X (hereinafter, referred to simply as "X direction", the same applies to Y and Z), by means of an X direction scanning motor of an X direction scanning mechanism 550, via a pulley and a belt.

The two heads 52a and 52b (hereinafter, referred to as "heads 52" when the two heads are not distinguished from each other) each have a plurality of nozzle lines in each of which a plurality of nozzles through which a liquid is discharged are arranged. The nozzle lines of the heads 52 are configured to discharge an object forming solution (ink) containing the radiant energy absorbent. The nozzle lines of the head 52a and the head 52b can also discharge object forming liquids colored in, for example, cyan, magenta, yellow, and black respectively. The configuration of the heads is not limited to as described above.

A plurality of tanks 60 containing these object forming liquids respectively are mounted on a tank loading section 56, and the object forming liquids are supplied into the heads 52a and 52b through, for example, supplying tubes.

A maintenance mechanism 61 configured to maintain and repair the heads 52 of the liquid discharging unit 50 is disposed at one side in the X direction.

The heads are provided with radiant energy sources 80 on both sides. The heads may be provided with a radiant energy source on either side instead. The radiant energy sources 80 are driven over a region to which the object forming solution containing the radiant energy absorbent is discharged from the heads 52. The radiant energy sources 80 may be driven together with the heads 52 by being provided in the carriage 51, or may also be driven alone in the X direction with a separate drive source provided.

The maintenance mechanism 61 mainly includes caps 62 and a wiper 63. The maintenance mechanism 61 is configured to bring the caps 62 into close contact with the nozzle surfaces (surfaces in which the nozzles are formed) of the heads 52 and suck the object forming liquids through the nozzles, in order to get rid of the powder clogging the nozzles or the object forming liquids having thickened. The maintenance mechanism 61 is also configured to subsequently wipe the nozzle surfaces with the wiper 63 to form a meniscus in the nozzles (the nozzles are at negative pressure internally). While the object forming liquids are not being discharged, the maintenance mechanism 61 covers the nozzle surfaces of the heads 52 with the caps 62 to prevent mixing of the powder 20 into the nozzles or drying of the liquid droplets 10.

The object forming unit 5 includes slider units 72 movably held on guide members 71 disposed over a base member 7, and the entire object forming unit 5 can reciprocate in the Y direction (sub-scanning direction) orthogonal to the X direction. The entire object forming unit 5 is reciprocated in the Y direction by means of a Y direction scanning motor of a Y direction scanning mechanism 552.

The liquid discharging unit 50 is disposed liftable upward and downward in the direction of the arrow Z together with the guide members 54 and 55. The liquid discharging unit 50 is lifted upward and downward in the Z direction by means of a Z direction scanning motor of a Z direction lifting mechanism 551 (see FIG. 4).

The object forming section 1 will be described in detail below.

The object forming section 1 includes the powder tank 11. The powder tank 11 has a box-like shape and includes three tanks with an opened top, namely the supplying tank 21, the object forming tank 22, and an excessive powder receiving tank 25. The supplying stage 23 and the object forming stage 24 are disposed liftably upward and downward in the supplying tank 21 and the object forming tank 22 respectively.

The side surface of the supplying stage 23 is disposed in contact with the internal surface of the supplying tank 21. The side surface of the object forming stage 24 is disposed in contact with the internal surface of the object forming tank 22. The upper surfaces of the supplying stage 23 and object forming stage 24 are kept level.

The flattening roller 12 transfers and supplies the powder 20 from the supplying tank 21 to the object forming tank 22, and levels off and flattens the surface to form a powder layer 31, which is the powder in a layer state having a predetermined thickness.

The flattening roller 12 is a rod-like member longer than the internal dimension of the object forming tank 22 and the supplying tank 21 (internal dimension: width of a portion supplied or filled with the powder), and is reciprocated in the Y direction (sub-scanning direction) along the stage surfaces by means of the reciprocating mechanism.

The flattening roller 12 is configured to horizontally move from outside the supplying tank 21 in a manner to pass above the supplying tank 21 and the object forming tank 22 while being rotated by means of the motor 26. In this way, the powder 20 is transferred and supplied to the object forming tank 22, and the flattening roller 12 flattens the powder 20 while passing above the object forming tank 22, to form a powder layer 31.

As illustrated in FIG. 3, there is provided a powder removing plate 13, which is a powder removing member configured to come into contact with the circumferential surface of the flattening roller 12 to remove the powder 20 adhering to the flattening roller 12. The powder removing plate 13 is configured to move together with the flattening roller 12 in a state of having contact with the circumferential surface of the flattening roller 12. The powder removing plate 13 may be disposed in a counter direction or a forward direction when the flattening roller 12 rotates in the rotating direction to perform flattening.

In the present embodiment, the powder tank 11 of the object forming section 1 includes two tanks, namely the supplying tank 21 and the object forming tank 22. However, only the object forming tank 22 may be provided, and the powder may be supplied to the object forming tank 22 from a powder supplying device and flattened by means of a flattening unit.

### <Overview of controlling section and flow of object formation>

Next, the controlling section of the three-dimensional object producing apparatus of the present embodiment will be generally described with respect to FIG. 4. FIG. 4 is a block diagram of the controlling section.

The controlling section 500 includes a main controlling section 500A including: a CPU 501 configured to control the entire apparatus; a ROM 502 configured to store a program causing the CPU 501 to perform control on a three-dimensional object forming operation including control relating to the producing method of the present embodiment, and other fixed data; and a RAM 503 configured to temporarily store, for example, object formation data.

The controlling section 500 includes a nonvolatile memory (NVRAM) 504 configured to retain data even while the power supply to the apparatus is cut off. The controlling section 500 includes an ASIC 505 configured to perform image processing for performing various signal processing on image data, and process input/output signals for controlling the entire apparatus.

The controlling section 500 includes an I/F 506 configured to send and receive data and signals and used for receiving object formation data from an external object formation data generating apparatus 600.

The object formation data generating apparatus 600 is an apparatus configured to generate object formation data, such as slice data representing each object forming layer sliced from 3D data of a final object (three-dimensional object). The object formation data generating apparatus 600 is an information processing apparatus such as a personal computer.

The controlling section 500 includes an I/O 507 configured to receive sensing signals from various sensors.

The controlling section 500 includes a head drive controlling section 508 configured to control driving of the heads 52 of the liquid discharging unit 50.

The controlling section 500 also includes a motor driving unit 510 configured to drive a motor of an X direction scanning mechanism 550 configured to move the carriage 51 of the liquid discharging unit 50 in the X direction (main scanning direction), and a motor driving unit 512 configured to drive a motor of the Y direction scanning mechanism 552 configured to move the carriage 51 of the liquid discharging unit 50 in the Y direction (sub-scanning direction).

The controlling section 500 includes a motor driving unit 511 configured to drive a motor of the Z direction lifting mechanism 551 configured to move (lift) the carriage 51 of the liquid discharging unit 50 upward and downward in the Z direction.

In lifting upward and downward in the direction of the arrow Z, the entire object forming unit 5 may be lifted upward and downward.

The controlling section 500 includes a motor driving unit 513 configured to drive a motor 27 configured to lift the supplying stage 23 upward and downward, and a motor driving unit 514 configured to drive a motor 28 configured to lift the object forming stage 24 upward and downward.

The controlling section 500 includes a motor driving unit 515 configured to drive a motor 553 of the reciprocating mechanism 25 configured to move the flattening roller 12, and a motor driving unit 516 configured to drive the motor 26 configured to drive rotation of the flattening roller 12.

The controlling section 500 includes a supply driving unit configured to drive the powder supplying device configured to supply the powder 20 to the supplying tank 21, and a maintenance driving unit 518 configured to drive the maintenance mechanism 61 for the liquid discharging unit 50.

Sensing signals of, for example, a temperature/humidity sensor 560 configured to detect the temperature and humidity as the environmental conditions of the apparatus and sensing signals of other sensors are input to the I/O 507 of the controlling section 500.

An operation panel 522 for inputting and displaying needed information of the apparatus is coupled to the controlling section 500.

The controlling section 500 receives object formation data from the object formation data generating apparatus 600. The object formation data includes shape data (object formation data) representing the shape of each object forming layer 30, in the form of slice data representing a slice from a shape of an intended three-dimensional object.

The main controlling section 500A performs control to cause the heads 52 to discharge the object forming liquids based on the object formation data of an object forming layer 30.

The object formation data generating apparatus 600 and the three-dimensional object producing apparatus (powder additive manufacturing apparatus) 601 constitute an object forming apparatus.

Next, the flow of object formation in the three-dimensional object producing apparatus of the present embodiment will be described with reference to FIG. 5A to FIG. 5F.

FIG. 5A to FIG. 5F are exemplary diagrams illustrating a flow of object formation. The description will start from a state that a first object forming layer 30 has been formed over the object forming stage 24 of the object forming tank 22.

When forming the next object forming layer 30 over the first object forming layer 30, the supplying stage 23 of the supplying tank 21 is lifted upward in the Z1 direction and the object forming stage 24 of the object forming tank 22 is lifted downward in the Z2 direction as illustrated in FIG. 5A.

The distance by which the object forming stage 24 is lifted downward is set such that the interval between the upper surface of the object forming tank 22 (the surface of the powder layer) and the lower side (the lower tangential portion) of the flattening roller 12 is Δt. The interval Δt corresponds to the thickness of a powder layer 31 to be formed next. The interval Δt is preferably about from several tens of micrometers through 100 micrometers.

Next, as illustrated in FIG. 5B, the powder 20 located above the upper surface level of the supplying tank 21 is moved in the Y2 direction (toward the object forming tank 22) while the flattening roller 12 is rotated in the forward direction (the direction of the arrow), to be transferred and supplied to the object forming tank 22 (supplying of powder).

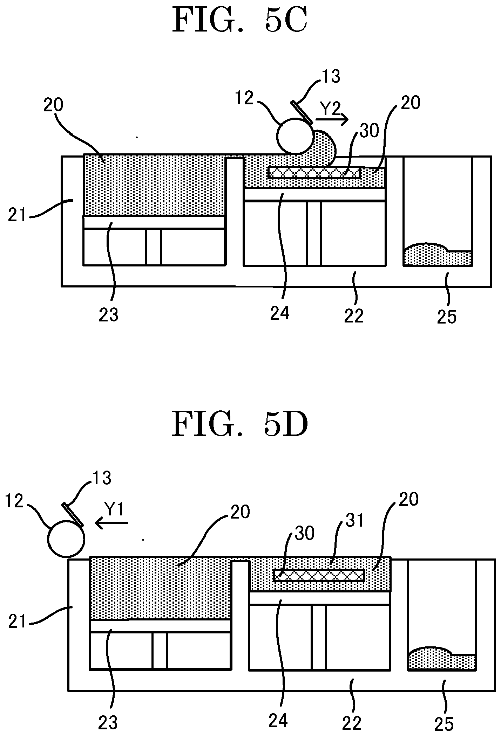

Then, the flattening roller 12 is moved in parallel with the stage surface of the object forming stage 24 of the object forming tank 22 as illustrated in FIG. 5C, to form a powder layer 31 having a predetermined thickness Δt over the object forming layer 30 over the object forming stage 24 as illustrated in FIG. 5D (flattening). After the powder layer 31 is formed, the flattening roller 12 is moved in the Y1 direction to be returned to the initial position as illustrated in FIG. 5D.

The flattening roller 12 is configured to be able to move with a constant distance kept from the upper surface level of the object forming tank 22 and the supplying tank 21. With the ability to move keeping a constant distance, the flattening roller 12 can form a powder layer 31 having a uniform thickness h (corresponding to a layer lamination pitch Δt) over the object forming tank 22 or over the object forming layer 30 already formed, while conveying the powder 20 to the top of the object forming tank 22.

The following description may be made without distinguishing between the thickness h of a powder layer 31 and the layer lamination pitch Δt1. Unless otherwise particularly noted, the thickness h and the layer lamination pitch Δt1 mean the same thickness. The thickness h of the powder layer 31 may be obtained by actual measurement. In this case, the thickness h is preferably an average of a plurality of positions.

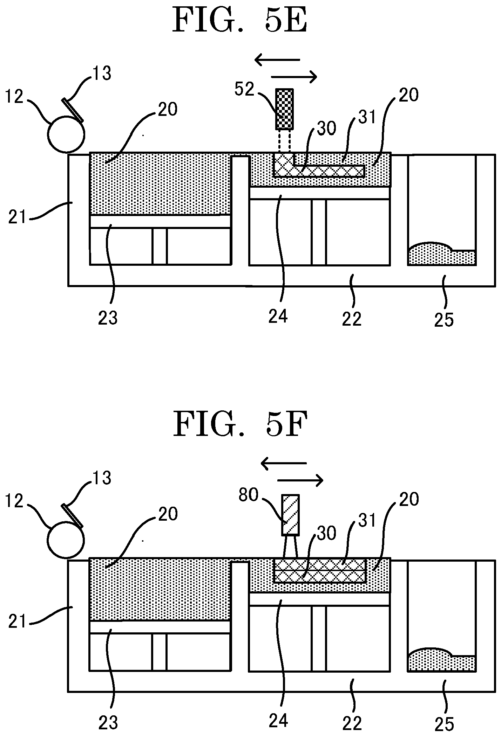

Subsequently, as illustrated in FIG. 5E, liquid droplets of the object forming liquids are discharged from the heads 52 of the liquid discharging unit 50.

The radiant energy source 80 is driven over the object forming tank as illustrated in FIG. 5F. In response, the temperature of the powder is elevated by means of the radiant energy absorbent in the powder, to make the powder dissolve and bind. In this way, an object (object forming layer 30) for one layer is obtained.

Next, the step of forming a powder layer 31 through supplying of the powder and flattening, the step of discharging the object forming liquids from the heads 52, and the step of emitting the radiant energy described above are repeated, to form a new object forming layer 30. Here, the new object forming layer 30 and the underlying object forming layers 30 are integrated and constitute a part of a three-dimensional object.

Afterwards, the step of forming a powder layer 31 through supplying of the powder and flattening, the step of discharging the object forming liquids from the heads 52, and the step of emitting the radiant energy are repeated a needed number of times, to complete a three-dimensional object.

As illustrated in FIG. 6, the radiant energy source 80 includes a light source 81 and a reflector 82.

In the present embodiment, the light source 81 is a spherical lamp light source. The light source is a high-density halogen lamp.

In the present embodiment, the reflector 82 has an approximately dome-like shape having an opening at one end, and the spherical lamp is provided within the region of the opening. The reflector 82 has an opening width A1 of 120 mm and an irradiation width B1 of 18 mm, and by means of the curved surface of the reflector 82, is configured to condense light in a manner that an area, which is to be irradiated with light from the light source 81 within a powder layer, is smaller than the area of the opening of the reflector 82 having an approximately dome-like shape.

Next, varieties of the radiant energy source 80 will be described by way of Embodiment 1-2 to Embodiment 1-5.

### (Embodiment 1-2)

As illustrated in FIG. 7, a radiant energy source 80 of the embodiment 1-2 includes three light sources 81a, 81b, and 81c within one reflector 82. Hence, according to the embodiment 1-2 in which the light sources 81a, 81b, and 81c are provided within one reflector 82, a small size and increase of the energy density can be achieved.

In the embodiment 1-2, three light sources are provided within one reflector. However, this is non-limiting, and the numbers of the reflector and the light source may be changed.

### (Embodiment 1-3)

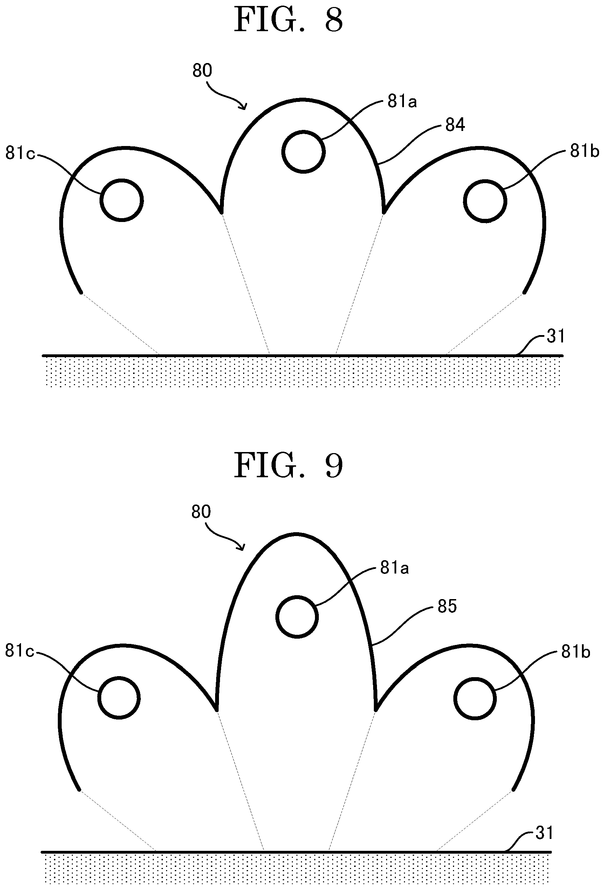

As illustrated in FIG. 8, a radiant energy source 80 of the embodiment 1-3 includes a linked reflector 84 formed of three reflectors linked to each other, and light sources 81a, 81b, and 81c in these reflectors respectively. Hence, according to the embodiment 1-3, increase of the energy density and increase of the light irradiation area can be achieved with a simple structure.

### (Embodiment 1-4)

As illustrated in FIG. 9, a radiant energy source 80 of the embodiment 1-4 is another version of the radiant energy source 80 of the embodiment 1-3, with change of the curvature of the central reflector to make the light focal length longer than the reflectors on both sides. Hence, according to the embodiment 1-4, the reflectors on both sides can be brought close to the center, realizing a small size.

### (Embodiment 1-5)

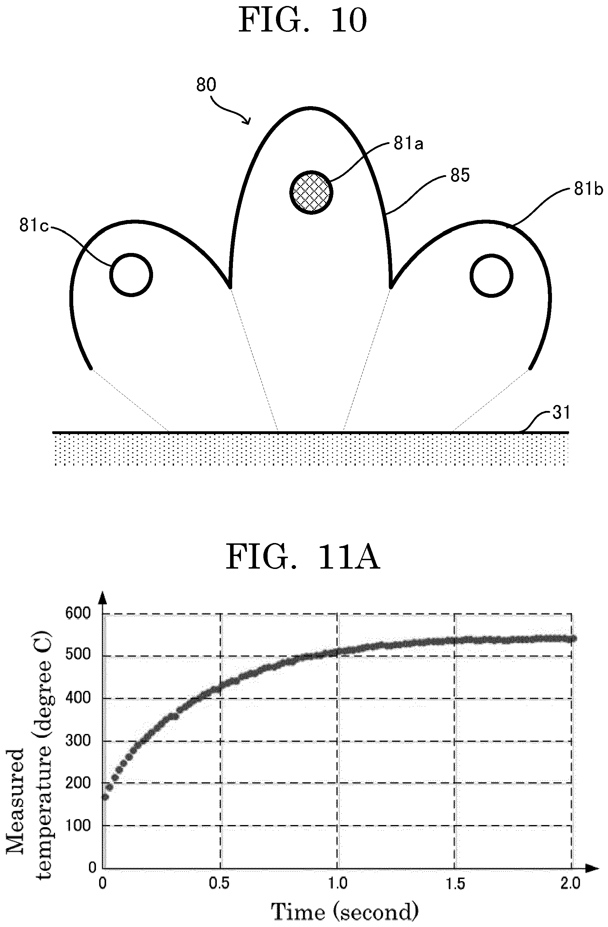

As illustrated in FIG. 10, a radiant energy source 80 of the embodiment 1-5 is another version of the radiant energy source 80 of the embodiment 1-4, with change of the light source provided in the central reflector to a light source 81a capable of emitting high-density energy. Hence, according to the embodiment 1-5, it is possible to emit light having a higher energy density than the radiant energy source 80 of the embodiment 1-4.

### EXAMPLES

The present disclosure will be described below by way of Examples. The present disclosure should not be construed as being limited to these Examples.

### (Example 1)

### <Three-dimensional object producing apparatus A>

A three-dimensional object producing apparatus A was the three-dimensional object producing apparatus illustrated in FIG. 1 to FIG. 6, and a spherical lamp high-density halogen lamp (light heating spot heater HSH-120, with a color temperature of 2,400 K, available from Fintech Co., Ltd.) was used as the light source 81 of the radiant energy source 80. The reflector illustrated in FIG. 6 with the opening width A1 of 120 mm and the irradiation width B1 of 18 mm was used as the reflector 82. With these settings, the energy density of the light to be emitted to a slurry described below was set to 0.2 W/mm². In this way, the three-dimensional object producing apparatus A was obtained.

The energy density was obtained by dividing total power consumption of the light source by the light irradiation area.

### <Evaluation of temperature elevation speed>

Using the obtained three-dimensional object producing apparatus A, light as the radiant energy was emitted from the radiant energy source 80 to a slurry having an average thickness of 500 micrometers and formed of a mixture at a ratio by mass of 1:1 between a powder containing PEEK (with a melting point of 340 degrees C) as the thermoplastic resin and the object forming solution (black ink, available from Ricoh Company, Ltd.) containing carbon black as the radiant energy absorbent, to evaluate the temperature elevation speed at which the temperature of the slurry was elevated to 340 degrees C. The result is plotted in FIG. 11A.

The temperature of the slurry was measured with a thermocamera (available from Optris GmbH). For light emission from the radiant energy source 80, the slurry was preheated with a hot plate at an intended temperature of 170 degrees C.

### (Example 2)

### <Three-dimensional object producing apparatus B>

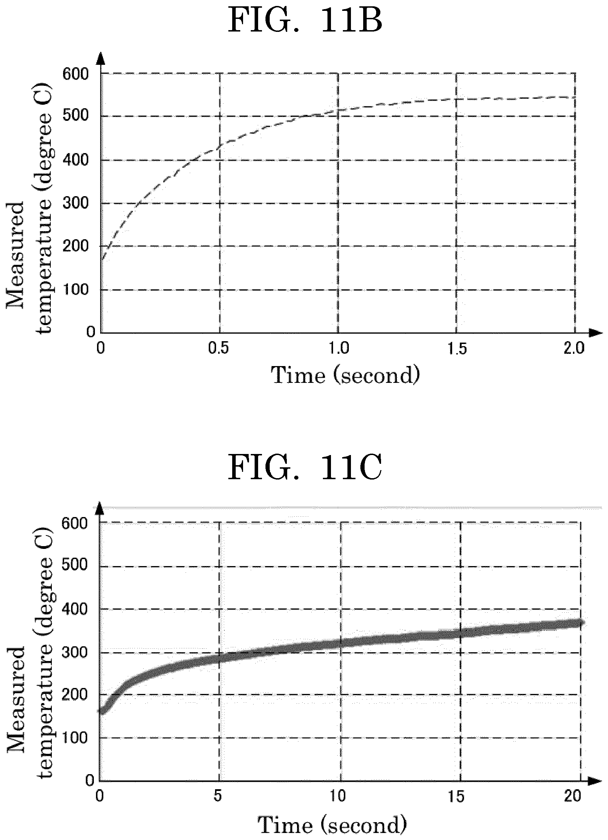

A three-dimensional object producing apparatus B of Example 2 was produced in the same manner as in Example 1, except that unlike in Example 1, the light emission intensity of the lamp was changed to change the energy density with which the slurry was irradiated from 0.2 W/mm² to 0.3 W/mm². The three-dimensional object producing apparatus B was evaluated in the same manner as in Example 1. The result is plotted in FIG. 11B.

### (Comparative Example 1)

### <Three-dimensional object producing apparatus C>

A three-dimensional object producing apparatus C of Comparative Example 1 was produced in the same manner as in Example 1, except that unlike in Example 1, the light source of the radiant energy source 80 was changed from the high-density halogen lamp to a low-density halogen lamp (line type halogen light source, with 3 W/mm², available from Ushio Inc.), to change the energy density from 0.2 W/mm² to 0.05 W/mm². The three-dimensional object producing apparatus C was evaluated in the same manner as in Example 1. The result is plotted in FIG. 11C.

The light source of Comparative Example 1 had approximately the same energy density as the infrared light source described in United States Patent Application Publication No. 2018/0126631, and was a typical halogen lamp. United States Patent Application Publication No. 2018/0126631 specifies that the quotient of the total power consumption of the lamp by the area of a powder layer is the energy density, and describes that a light source of 5 W/cm², i.e., 0.05 W/mm² is used.

From the results of FIG. 11A to FIG. 11C, it is seen that in Comparative Example 1 in which the energy density was 0.05 W/mm², about 10 seconds was taken from when the light energy was emitted until when the temperature of the slurry was elevated to 340 degrees C that was the melting point of PEEK. As compared, in Example 1 in which the energy density was 0.2 W/mm², only about 0.15 seconds was taken from when the light energy was emitted until when the temperature of the slurry was elevated to 340 degrees C. In this regard, the energy density in Example was increased by 7.5 times (=0.3/0.04) from the energy density in Comparative Example, whereas the time taken for temperature elevation was saved to about 1/70 (=0.15/10). This indicates that the time taken for temperature elevation was saved by equal to or greater than expected from the energy density ratio.

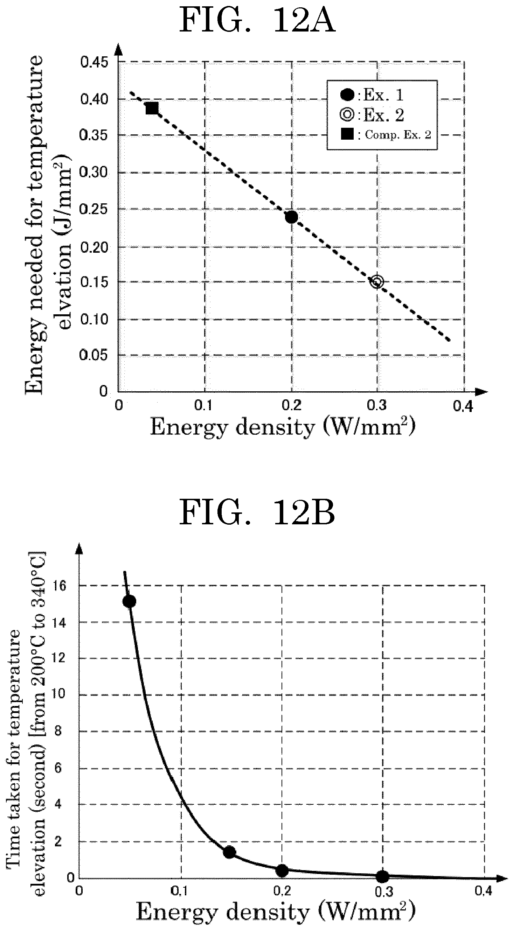

Further, using the results of FIG. 11A to FIG. 11C, the product between the transition time until when the slurry was heated to 340 degrees C that was the melting point of PEEK, and the radiant energy density was calculated, to calculate the energy needed for the slurry to be heated to 340 degrees C. The results are plotted in FIG. 12A and FIG. 12B.

As plotted in FIG. 12A and FIG. 12B, it can be seen that a higher energy density for irradiation of the slurry enabled greater saving of the energy needed for temperature elevation. Particularly, as plotted in FIG. 12B, it can been seen that the effect of improving the energy efficiency for temperature elevation was significant in the energy density region of 0.1 W/mm² or higher. It can also be seen that the energy density region of 0.3 W/mm² or higher was close to the point at which saving of the time taken for temperature elevation is full, i.e., the upper limit at which saving of the time taken for temperature elevation can be achieved. For object formation with a material having a high melting point, it is very effective to be able to increase the temperature elevation speed as described above, in terms of saving machine costs and improving the object formation speed.

Next, the object formation accuracy of a three-dimensional object formed with a material having a high melting point was evaluated.

### (Example 3)

### <Three-dimensional object producing apparatus D>

A three-dimensional object producing apparatus D was the three-dimensional object producing apparatus illustrated in FIG. 1 to FIG. 6, and a high-density halogen lamp (light heating spot heater HSH-120, with a color temperature of 2,400 K, available from Fintech Co., Ltd.) was used as the light source 81 of the radiant energy source 80. The reflector illustrated in FIG. 6 with an opening width A1 of 50 mm and an irradiation width B1 of 5 mm was used as the reflector 82, to set the energy density to 0.6 W/mm². In this way, the three-dimensional object producing apparatus D was obtained.

### <Elevation of object formation accuracy>

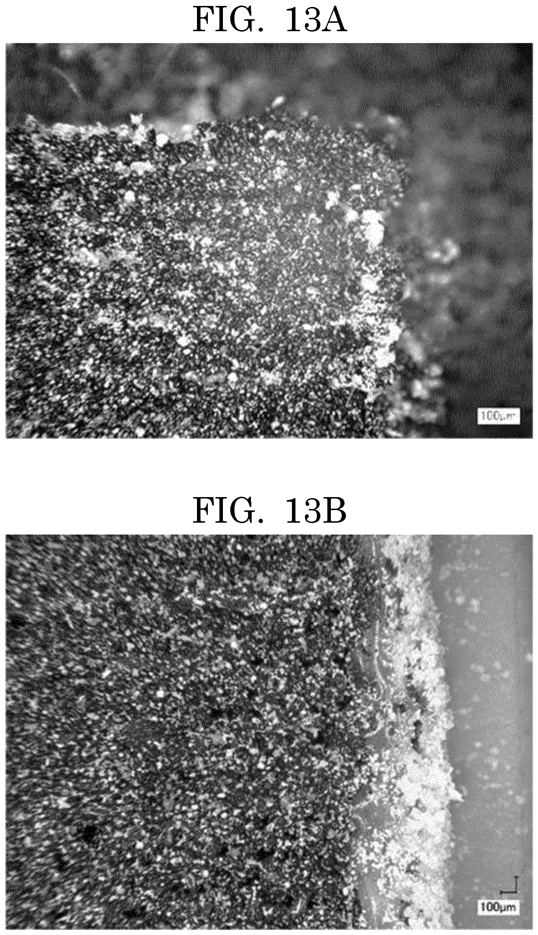

Using the three-dimensional object producing apparatus D obtained, and using a powder containing PEEK (with a melting point of 340 degrees C) as the thermoplastic resin and the object forming solution (black ink, available from Ricoh Company, Ltd.) containing carbon black as the radiant energy absorbent, the object formation procedures (1) to (3) described below were repeated twenty times, to produce a three-dimensional object. Any excessive powder particles were removed by air, and an end portion of the three-dimensional object produced was observed with a microscope. The result is illustrated in FIG. 13A.
(1) With a manually operable recoater jig, the powder containing PEEK as the thermoplastic resin was densely laid in the object forming tank having a size of 100 mm on each side in the form of a powder layer having an average thickness of 100 micrometers.
(2) With an inkjet head (available from Ricoh Company, Ltd.), the object forming solution (black ink) containing carbon black was discharged to a region having a size of 10 mm on each side.
(3) With the radiant energy source 80 using a high-density halogen lamp as the light source, radiant energy was emitted for an irradiation time of 0.3 seconds.

### (Comparative Example 2)

### <Three-dimensional object producing apparatus E>

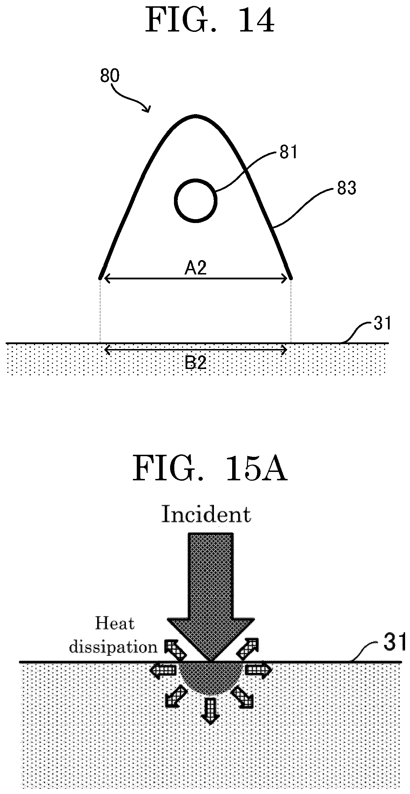

A three-dimensional object producing apparatus E of Comparative Example 2 was produced in the same manner as in Example 3, except that unlike in Example 3, the light source of the radiant energy source 80 was changed from the high-density halogen lamp to a halogen lamp (line type halogen light source, with 3 W/mm², available from Ushio Inc.), the reflector illustrated in FIG. 14 with an opening width A2 of 60 mm and an irradiation width B2 of 60 mm was used to change the energy density from 0.6 W/mm² to 0.04 W/mm², and the irradiation time was changed to 20 seconds. The three-dimensional object producing apparatus E was evaluated in the same manner as in Example 3. The result is illustrated in FIG. 13B.

In FIG. 13B, the white portion in the right-hand side of the view is the powder to which the object forming solution was not discharged, i.e., the powder in a non-object forming region. That is, in FIG. 13B, which is the image of an end portion of the three-dimensional object produced in Comparative Example 2, it can be seen that an abundance of excessive powder particles adhered to the three-dimensional object.

On the other hand, in FIG. 13A, which is the image of an end portion of the three-dimensional object produced in Example 3, it can be seen that almost no excessive powder particles as in FIG. 13B adhered to the three-dimensional object.

From the results described above, it was successfully confirmed that the three-dimensional object of Example 3 had a better object formation accuracy than the three-dimensional object of Comparative Example 2.

In this regard, it is considered that the higher energy density in Example 3 enabled saving of the time taken for temperature elevation as illustrated in FIG. 15A, making the time, which may be spent for the heat to be dissipated to a non-object forming region or to the air from the position irradiated with the energy, shorter, leading to improvement of the energy efficiency. Moreover, it is considered that the powder in the non-object forming region was less susceptible to being heated, making the powder particles in the non-object forming region less likely to fuse with each other, making it possible to suppress excessive powder particles from adhering to the three-dimensional object, leading to formation of the three-dimensional object with a good accuracy.

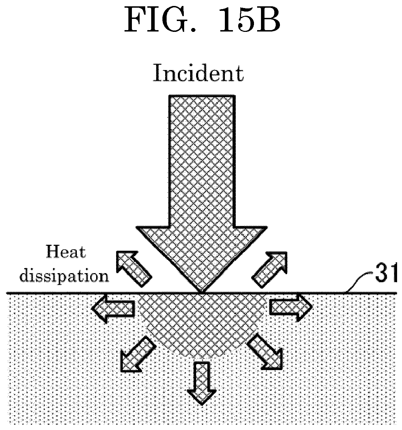

On the other hand, it is considered that the lower energy density in Comparative Example 2 made the time taken for temperature elevation longer as illustrated in FIG. 15B, making the time, which may be spent for the heat to be dissipated to a non-object forming region or to the air from the position irradiated with the energy, longer, leading to a lower energy efficiency than in Example 3. Moreover, it is considered that the powder in the non-object forming region was more susceptible to being heated, making the powder particles in the non-object forming region more likely to fuse with each other, making excessive powder particles adhere to the three-dimensional object, leading to degradation of the object formation accuracy of the three-dimensional object.

As can be understood, condensing the light from the halogen lamp using the reflector makes it possible to increase the energy efficiency and form a three-dimensional object with a material having a high melting point with a good accuracy.

The degree of light condensation can be defined by, for example, the ratio between the opening width of the reflector and the irradiation width of the light over a powder surface.

Next, the relationship between the degree of light condensation (irradiation width/opening width) and the irradiance will be described.

### (Example 4)

### <Three-dimensional object producing apparatus F>

A three-dimensional object producing apparatus F was the three-dimensional object producing apparatus illustrated in FIG. 1 to FIG. 6, and a high-density halogen lamp (line heater LHW30/f20/L84/200V-850W, with a color temperature of 2,400 K, available from Fintech Co., Ltd.) was used as the light source 81 of the radiant energy source 80. The reflector illustrated in FIG. 6 with an opening width A1 of 50 mm and an irradiation width B1 of 5 mm was used as the reflector 82.

### <Relationship between degree of light condensation (irradiation width/opening width) and irradiance>

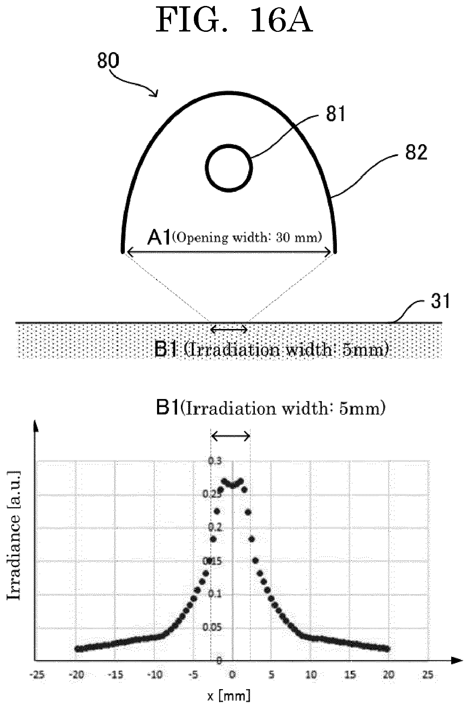

An irradiation profile of the obtained three-dimensional object producing apparatus F at an energy density of 0.6 W/mm² was calculated by simulation. The result is plotted in FIG. 16A.

### (Comparative Example 3)

### <Three-dimensional object producing apparatus G>

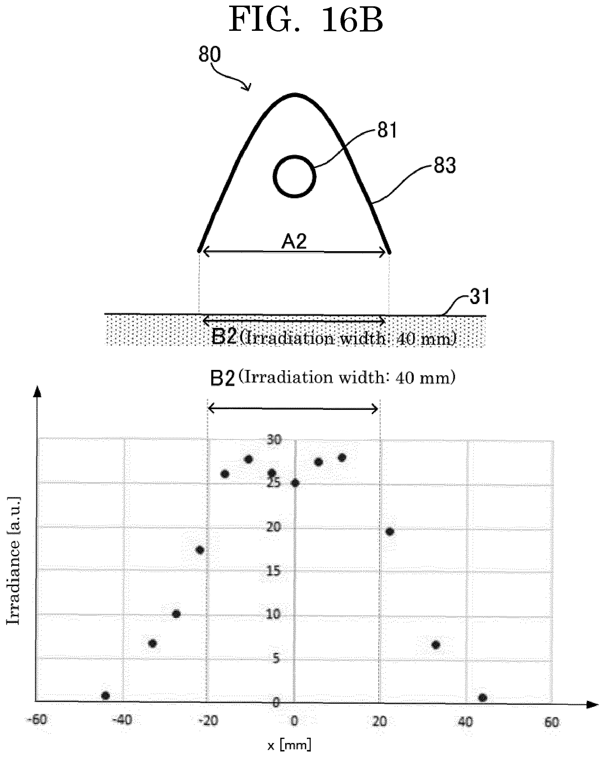

A three-dimensional object producing apparatus G of Comparative Example 3 was produced in the same manner as in Example 4, except that unlike in Example 4, the light source of the radiant energy source 80 was changed from the high-density halogen lamp to a halogen lamp (line type halogen light source, with 3 W/mm² and a color temperature of 2,400 K, available from Ushio Inc.), the reflector illustrated in FIG. 14 with an opening width A2 of 40 mm and an irradiation width B2 of 60 mm was used to change the energy density from 0.6 W/mm² to 0.04 W/mm², the irradiation time was set to 20 seconds, and the irradiance was actually measured with an illuminometer (T-10M, available from Konica Minolta, Inc.). The three-dimensional object producing apparatus G was evaluated in the same manner as in Example 4. The result is plotted in FIG. 16B.

As described above, the three-dimensional object producing apparatus of the present disclosure includes a powder layer forming unit configured to form a powder layer, a radiant energy absorbent applying unit configured to apply a radiant energy absorbent over the powder layer, and a radiant energy applying unit configured to apply radiant energy having an energy density of 0.1 W/mm² or higher to the powder layer over which the radiant energy absorbent is applied.

Accordingly, the three-dimensional object producing apparatus of the present disclosure can increase the energy efficiency and form a three-dimensional object with a good accuracy using a material having a high melting point.

### (Embodiment 2-1)

The embodiment 2-1 is another version of the embodiment 1-1, using a first radiant energy source 80 configured to apply a first radiant energy having a first energy density as the radiant energy source illustrated in FIG. 5F, and a second radiant energy source 81 (unillustrated) configured to apply a second radiant energy having a second energy density lower than the first energy density, to fuse a powder layer 31. That is, the first radiant energy source 80, and subsequently to the first radiant energy source 80, the second radiant energy source 81 are scanned, to each apply radiant energy to the powder layer 31 and fuse the powder layer 31, to obtain one object forming layer 30 with no warpage.

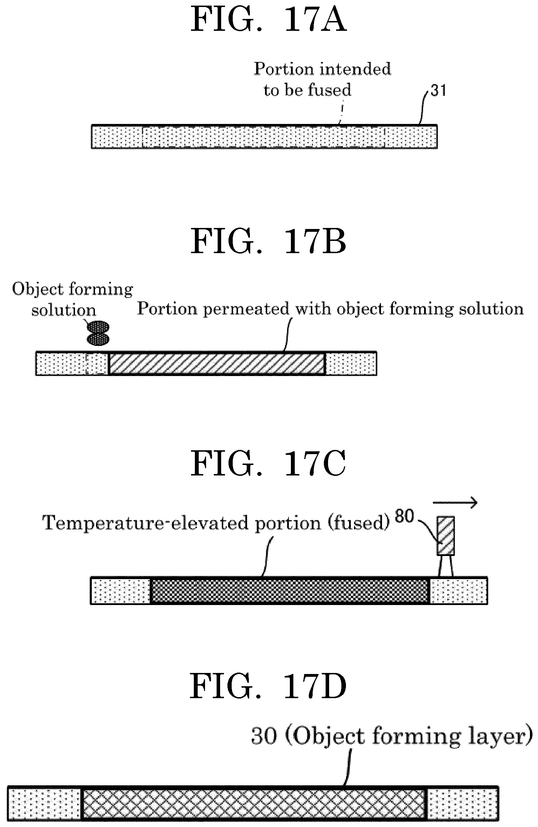

FIG. 17A to FIG. 17F are views illustrating an example process of irradiating the powder layer permeated by the object forming liquid with the radiant energy to fuse the powder layer. How warpage of an object forming layer occurs in a HSS system will be described with reference to FIG. 17A to FIG. 17F.

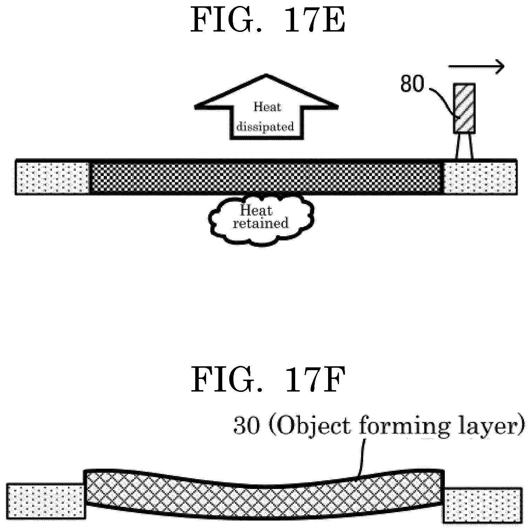

First, a portion (FIG. 17A) in a powder layer 31 intended to be fused is coated and permeated with the object forming liquid containing the radiant energy absorbent (FIG. 17B), and irradiated with the radiant energy to cause the radiant energy absorbent, which is contained in the portion permeated with the object forming liquid, to generate heat, to elevate the temperature of the powder layer 31. Next, when the powder layer 31 after fused (FIG. 17C) is lowered in temperature to be solidified, ideally, an object forming layer 30 with no warpage is formed (FIG. 17D). Actually, during temperature lowering for solidification, the upper surface side of the powder layer 31 is exposed to the air, making the temperature lowering speed higher at the upper surface side. On the other hand, the temperature lowering speed at the lower surface side of the powder layer 31 is lower than at the upper surface side, because the lower surface side is covered with an object forming layer or the powder (FIG. 17E). For this reason, there may be a case where warpage occurs in the powder layer 31, because the upper surface side from which heat is likely to be dissipated to the air shrinks faster than the lower surface side (FIG. 17F).

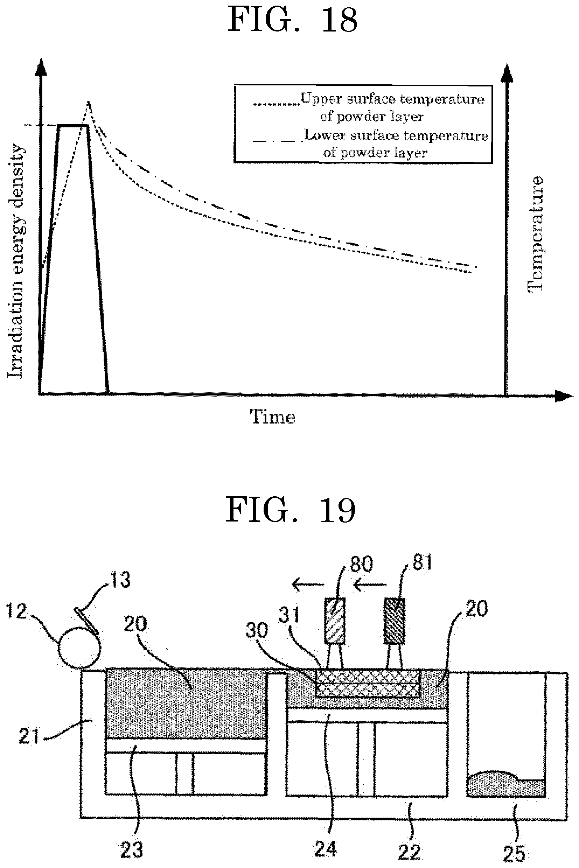

FIG. 18 is a graph plotting an example relationship between the irradiation energy density with which a powder layer is irradiated and the temperature profiles of the upper surface and the lower surface of the powder layer according to an existing technique. The horizontal axis represents time, the first vertical axis represents irradiation energy density, and the second vertical axis represents temperature. The bold line in the graph plots the irradiation energy density, the dotted line plots the upper surface temperature of the powder layer, and the alternate long and short dash line plots the lower surface temperature of the powder layer.

As plotted in FIG. 18, during temperature lowering for solidification of the powder layer after energy application, the temperature of the upper surface side from which heat is likely to be dissipated to the air drops below the temperature of the lower surface side, causing a difference between the upper surface temperature of the lower surface temperature of the powder layer. Hence, the upper surface side shrinks faster than the lower surface side, to warp the powder layer 31. Warpage is particularly considerable when the material of the powder layer 31 is a material having a high melting point such as a super engineering plastic, making the entire three-dimensional object likely to warp.

Hence, as illustrated in FIG. 19, the three-dimensional object producing apparatus of the embodiment 2-1 applies the first radiant energy having the first radiant energy density to the powder layer 31 while moving the first radiant energy source 80 in the direction indicated by the arrow in the drawing. Then, the three-dimensional object producing apparatus applies the second radiant energy having the second radiant energy density lower than the first radiant energy density to the powder layer 31 while moving the second radiant energy source 81, which is disposed downstream in the mentioned direction, in the same direction subsequently to the first radiant energy source 80.

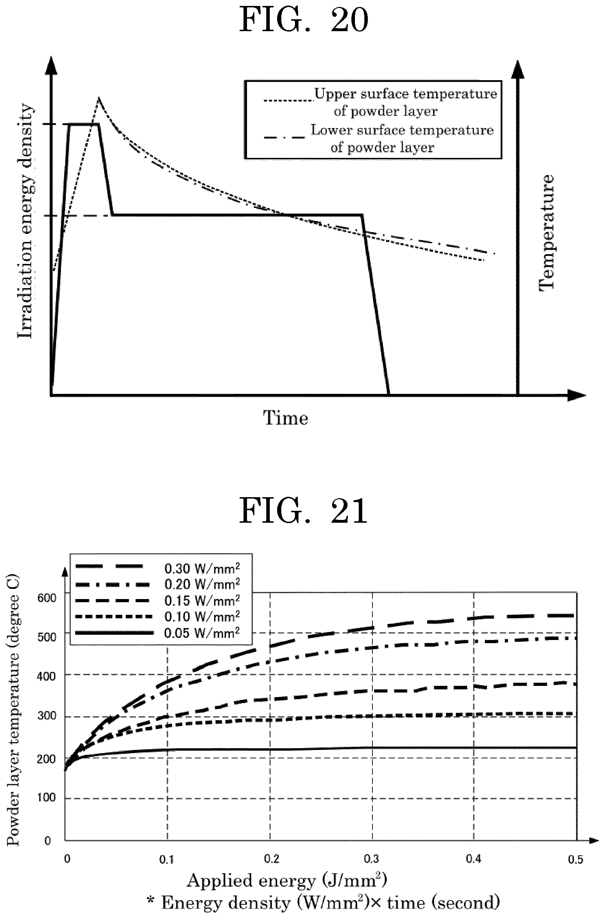

In this way, after application of the first radiant energy intended to fuse the powder layer, the second radiant energy is applied during subsequent temperature lowering for solidification as plotted in FIG. 20, so that the upper surface temperature of the powder layer susceptible to heat dissipation to the air may be prevented from dropping below the lower surface temperature of the powder layer. As a result, temperature variation within the powder layer is reduced, making it possible to obtain an object forming layer 30 with little warpage.

Next, the first radiant energy will be described.

FIG. 21 is a graph plotting an example relationship between the energy applied to a powder layer and the temperature of the powder layer. In the example of FIG. 21, a PEEK powder and a black ink (containing carbon black, available from Ricoh Company, Ltd.) were mixed at a ratio by weight of 1:1, and the obtained slurry was applied over a glass slide to have an average thickness of 0.5 mm, placed on a hot plate together with the glass slide, and heated in a manner that the surface temperature of a powder layer would be 170 degrees C. The surface temperature of the powder layer was measured with a thermocamera XI80 (available from Optris GmbH).

After the surface temperature of the powder layer became stable, radiant energy was applied to the surface of the powder layer, and temperature changes of the surface of the powder layer during the application were recorded. As the radiant energy source, a light heating spot heater (HSH-120, available from Fintech Co., Ltd.) was used. To change the condition of the radiant energy density, output power setting of a power controller for a halogen lamp heater (HLC-HN TYPE, available from Fintech Co., Ltd.) was used. The radiant energy density was defined as a value obtained by dividing the output power (unit: W) displayed on the controller by the area (unit: mm²) exposed to light. The horizontal axis of FIG. 21 represents the energy applied (unit: J/mm²). The energy applied was the product of the energy density (W/mm²) of the radiant energy source by the time (second) for which the radiant energy was applied to an arbitrary point on the surface of the powder layer. It turned out that a greater temperature elevation with respect to the radiant energy applied was a more efficient temperature elevation. For example, when the radiant energy applied was 0.1 J/mm², temperature elevation was up to only 277 degrees C when the radiant energy density applied was 0.1 W/mm², whereas temperature elevation was up to 360 degrees C when the radiant energy density applied was 0.2 W/mm².

From FIG. 21, it turned that the energy density of 0.2 W/mm² or higher was preferable in terms of energy efficiency. When energy is applied at a radiant energy density of 0.2 W/mm² or higher, 350 degrees C is exceeded in 0.5 seconds. Among typical resin materials used for object formation in the present embodiment, PEEK has the highest melting point, which is 343 degrees C. Hence, there is no need for temperature elevation up to 350 degrees C or higher. Moreover, at such a high temperature as 350 degrees C, there is a risk that materials may be thermally cracked. Accordingly, the time for which the radiant energy is applied at a high radiant energy density is preferably within 0.5 seconds.

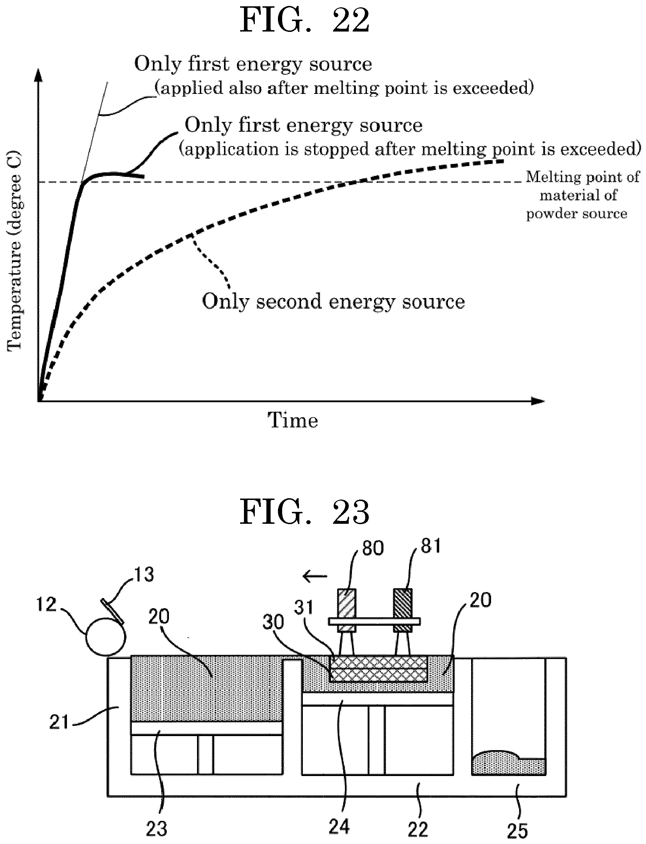

FIG. 22 is a graph plotting an example of temperature elevation speed. In FIG. 22, the horizontal axis represents time, and the vertical axis represents temperature of a powder layer.

As plotted in FIG. 22, when the second energy source is only used as the energy source for fusing, the temperature elevation speed is low as plotted by the dotted line in FIG. 22, leading to a poor productivity. When the first energy source is used as the energy source for fusing and the energy is applied for a long time, temperature elevation is at a high speed as plotted by the thin line in FIG. 22, but temperature elevation continues even while fusing of the powder layer is developing. Therefore, the material of the powder layer may be thermally cracked, or even if the material is not thermally cracked, the powder layer may be heavily warped because the temperature difference from the ambient temperature is significant. In this regard, as plotted by the bold line in FIG. 22, it is preferable to use the first energy source as the energy source for fusing, and switch from the first energy to the second energy when the melting point of the material of the powder layer is exceeded.

In FIG. 19, the first radiant energy source 80 and the second radiant energy source 81 are separately provided. This is non-limiting. For example, as illustrated in FIG. 23, the radiant energy sources may be mounted on a common moving unit (carriage 51) and integrated. Hence, there is no need for providing the respective radiant energy sources with driving units separately, making it possible to reduce the number of parts and to make the apparatus smaller in size.

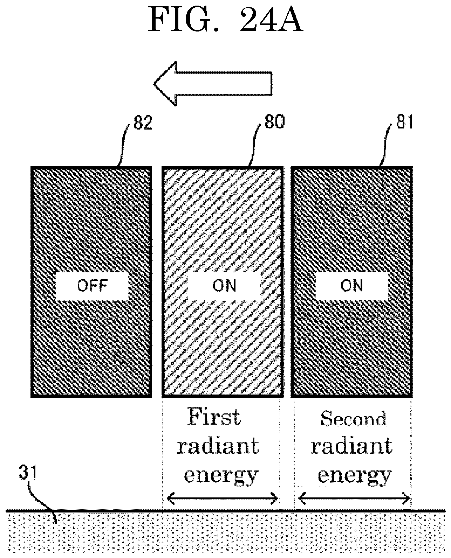

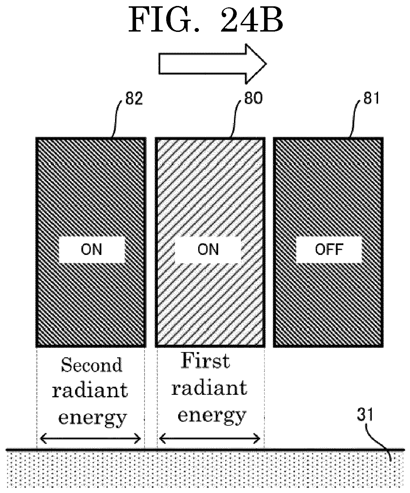

At least one of the first radiant energy source 80 and the second radiant energy source 81 may be used in a number greater than one in an integrated state, and the embodiment illustrated in FIG. 24A and FIG. 24B may be employed. Specifically, a second radiant energy source 81 an a second radiant energy source 82 may be disposed on both sides of a first radiant energy source 80 and integrated in this state. Hence, during scanning in the scanning direction indicated by the arrow in FIG. 24A, the first radiant energy source 80 and the second radiant energy source 81 are turned ON, making it possible to irradiate a powder layer 31 with the first radiant energy and the second radiant energy in this order. Further, during scanning in the scanning direction indicated by the arrow in FIG. 24B, the first radiant energy source 80 and the second radiant energy source 82 are turned ON, making it possible to irradiate the powder layer 31 with the first radiant energy and the second radiant energy in this order. Accordingly, the embodiment illustrated in FIG. 24A and FIG. 24B enables reciprocating scans, and is advantageous for productivity improvement.

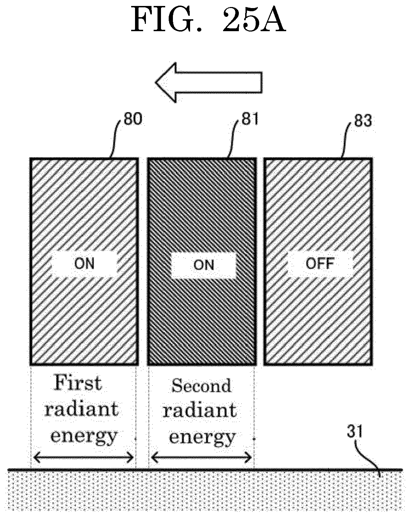

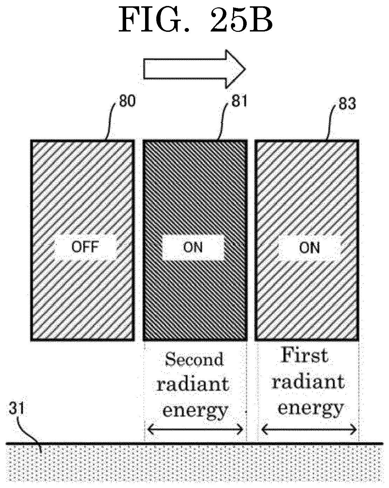

The radiant energy sources may also be integrated as illustrated in FIG. 25A and FIG. 25B. Specifically, a first radiant energy source 80 and a first radiant energy source 83 may be disposed on both sides of a second radiant energy source 81 and integrated in this state.

Hence, during scanning in the scanning direction indicated by the arrow in FIG. 25A, the first radiant energy source 80 and the second radiant energy source 81 are turned ON, making it possible to irradiate a powder layer 31 with the first radiant energy and the second radiant energy in this order. During scanning in the scanning direction indicated by the arrow in FIG. 25B, the first radiant energy source 83 and the second radiant energy source 81 are turned ON, making it possible to irradiate the powder layer 31 with the first radiant energy and the second radiant energy in this order.

Accordingly, the embodiment illustrated in FIG. 25A and FIG. 25B also enables reciprocating scans like the embodiment illustrated in FIG. 24A and FIG. 24B, and is advantageous for productivity improvement.

Which of the embodiment illustrated in FIG. 24A and FIG. 24B and the embodiment illustrated in FIG. 25A and FIG. 25B is suitable may be determined in consideration of the initial cost of the first radiant energy source and the frequency of lamp replacement.

Specifically, the embodiment illustrated in FIG. 24A and FIG. 24B with one first radiant energy source is advantageous in saving the initial cost. The embodiment illustrated in FIG. 25A and FIG. 25B with two first radiant energy sources is advantageous in suppressing the frequency of lamp replacement.

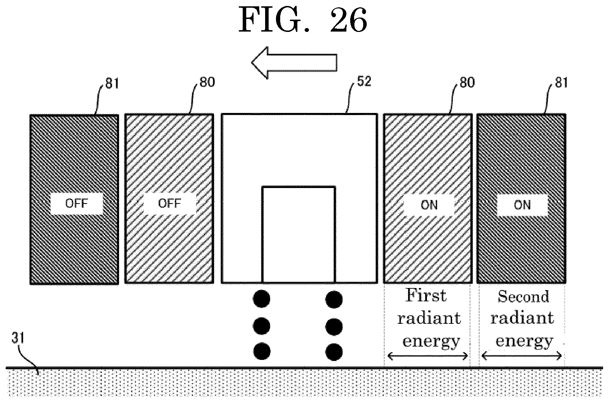

Moreover, a head 52 and a plurality of radiant energy sources may be integrated as illustrated in FIG. 26. Specifically, two first radiant energy sources 80 may be disposed on both sides of the head 52, and two second radiant energy sources 81 may further be disposed on both sides of the resultant for integration.

Hence, during scanning in the scanning direction indicated by the arrow in FIG. 26, the first radiant energy source 80 and the second radiant energy source 81 on the right-hand side of the drawing are turned ON, making it possible to irradiate a powder layer 31 with the first radiant energy and the second radiant energy in this order while discharging the object forming liquid from the head 52.

Hence, in the embodiment illustrated in FIG. 26, there is no need for providing the head and the respective radiant energy sources with driving units separately, making it possible to reduce the number of parts and to make the apparatus smaller in size.

Next, varieties of the first radiant energy source and the second radiant energy source will be described by way of Embodiment 2-2 to Embodiment 2-4.

### (Embodiment 2-2)

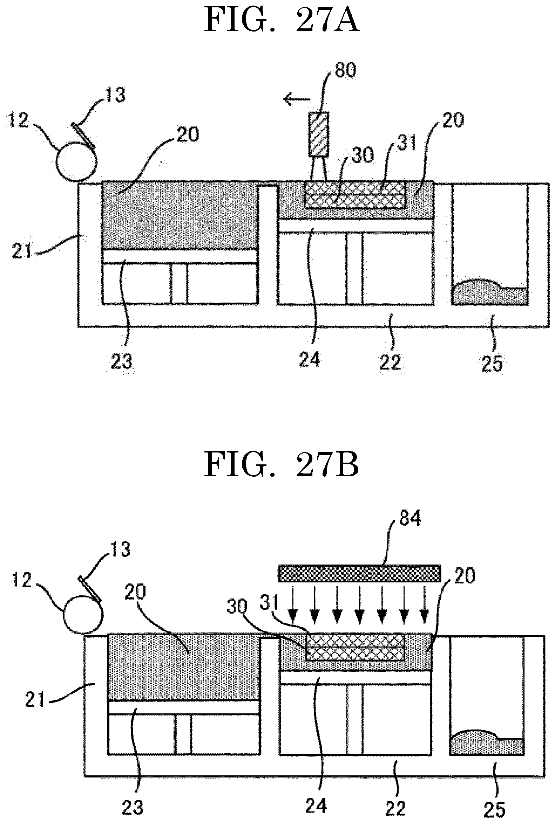

The embodiment 2-2 is the same as the embodiment 2-1 in the first radiant energy source 80 (FIG. 27A), but is different from the embodiment 2-1 illustrated in FIG. 5F in that the second radiant energy source 81 is a line-shaped or plate-shaped second radiant energy source 84 (FIG. 27B).

Hence, in the embodiment 2-2, it is possible to apply the second radiant energy to a powder layer 31 without scanning the second radiant energy source, and adjust the application time based on control of the ON time.

Accordingly, the embodiment 2-2, in which it is also possible to set a moderate temperature lowering speed by applying the second radiant energy for a long time, is advantageous in that occurrence of temperature variation can be better suppressed.

### (Embodiment 2-3)

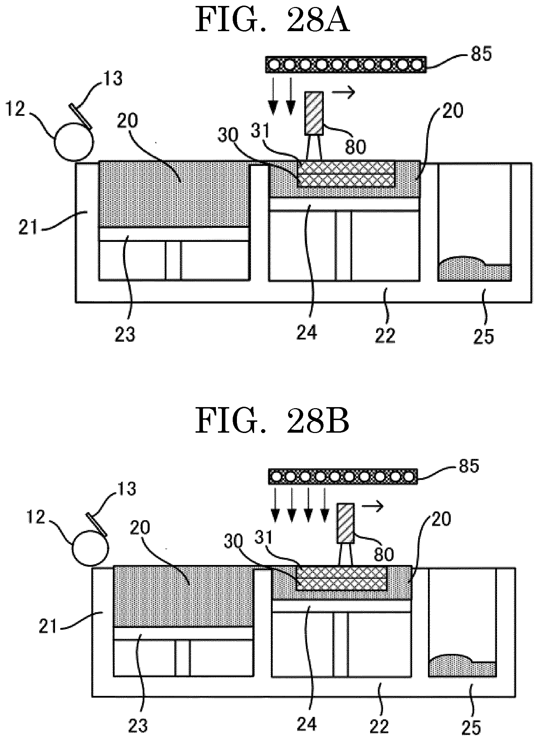

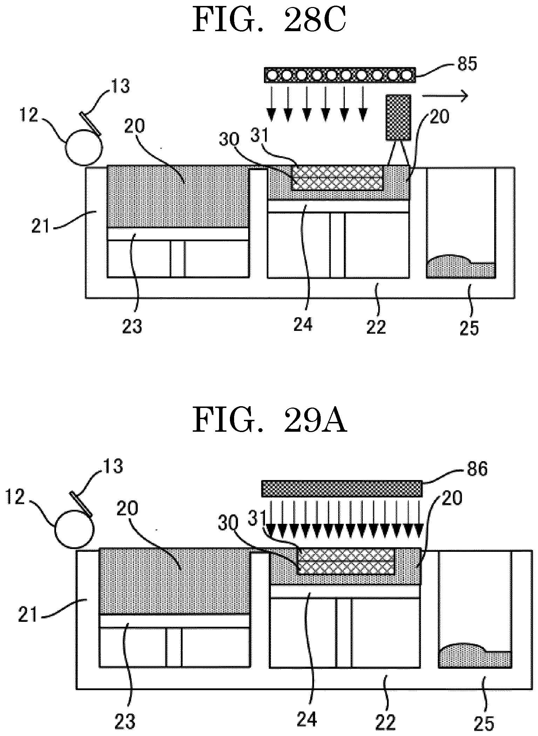

The embodiment 2-3 is the same as the embodiment 2-1 in the first radiant energy source 80, but is different from the embodiment 2-1 illustrated in FIG. 5F in that the second radiant energy source 81 is an array-shaped second radiant energy source 85 as illustrated in FIG. 28A to FIG. 28C. This second radiant energy source 85 is an array of individual radiant energy sources. After the first radiant energy source 80 applies the first radiant energy to a powder layer 31 while moving, the second radiant energy source 85 turns ON the individual radiant energy sources sequentially to apply the second radiant energy.

Hence, in the embodiment 2-3, it is possible to apply the second radiant energy to a powder layer 31 without scanning the second radiant energy source like the embodiment 2-2, and adjust the application time more minutely based on control of the ON time of the individual radiant energy sources. Moreover, the embodiment 2-3, in which it is also possible to set a moderate temperature lowering speed by applying the second radiant energy for a long time, is advantageous in that occurrence of temperature variation can be better suppressed.

### (Embodiment 2-4)

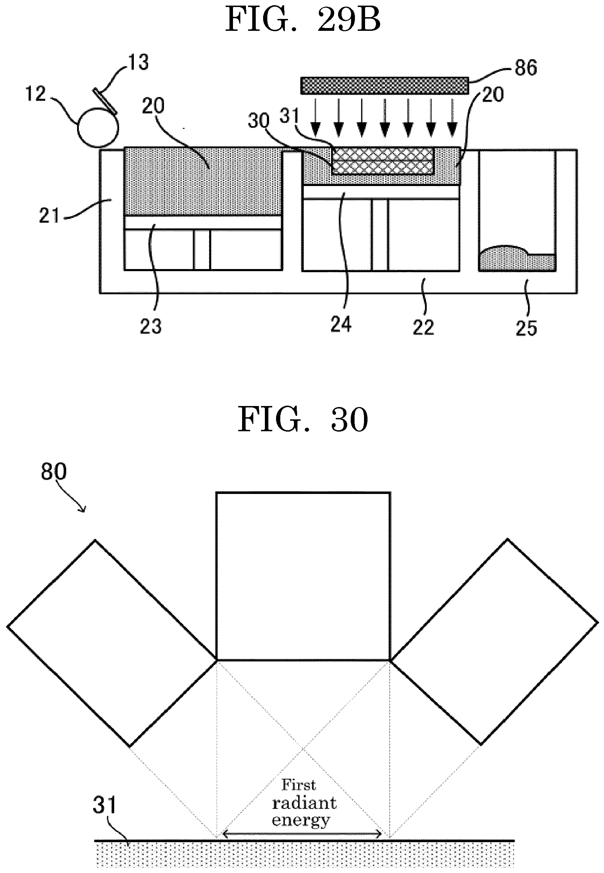

In the embodiment 2-4, the first radiant energy source and the second radiant energy source are a common radiant energy source 86. Specifically, in the embodiment 2-4, as illustrated in FIG. 29A, the radiant energy source 86 applies the first radiant energy to a powder layer 31 first. Next, as illustrated in FIG. 29B, the radiant energy source 86 applies the second radiant energy to the powder layer 31.

Hence, in the embodiment 2-4, it is possible to apply the first radiant energy and the second radiant energy to a powder layer 31 without scanning the radiant energy source, and control the application times of the first radiant energy and the second radiant energy independently. Moreover, the embodiment 2-4, in which it is possible to set a moderate temperature lowering speed by applying the second radiant energy for a long time as in the embodiment 2-3, is advantageous in that occurrence of temperature variation can be better suppressed. Furthermore, in the embodiment 2-4, it is possible to save the production cost because the structure of the radiant energy source can be simplified.

Next, varieties of the method for adjusting the radiant energy density will be described by way of Embodiment 2-5 to Embodiment 2-10.

### (Embodiment 2-5)

In the embodiment 2-5, radiant energies from three radiant energy sources are converged as illustrated in FIG. 30, in order to apply a first radiant energy higher than a second radiant energy density to a powder layer 31.

Hence, in the embodiment 2-5, the first radiant energy source can be realized with a simple structure.

In the embodiment 2-5, radiant energies from three radiant energy sources are converged. This is non-limiting. Radiant energy sources from two, or four or more radiant energy sources may be converged.

### (Embodiment 2-6)

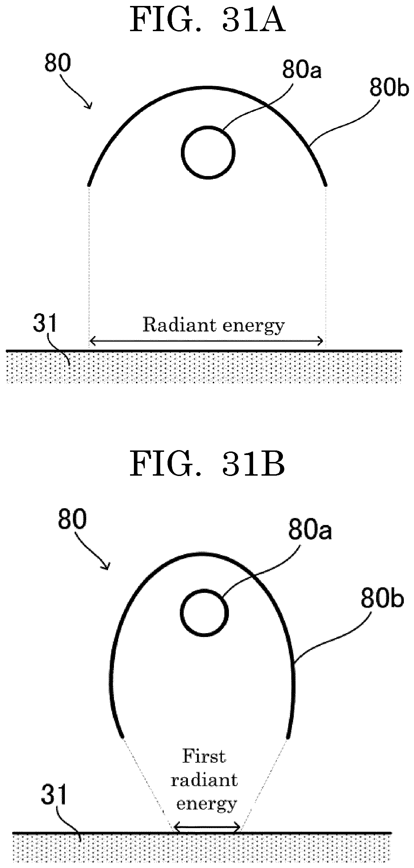

In the embodiment 2-6, radiant energy obtained from one radiant energy source is converged as illustrated in FIG. 31A to FIG. 31C, in order to apply a first radiant energy higher than a second radiant energy density to a powder layer 31.

FIG. 31A is a schematic view illustrating an example of a radiant energy source including a light source and a reflector. The radiant energy source illustrated in FIG. 31A is configured to reflect energy from a light source 80a by a reflector 80b, to apply the radiant energy to a powder layer 31. Hence, in the embodiment 2-6, in order to apply a first radiant energy higher than a second radiant energy density to a powder layer 31, the curvature of the reflector is changed as illustrated in FIG. 31B to converge radiant energy obtained from one radiant energy source.

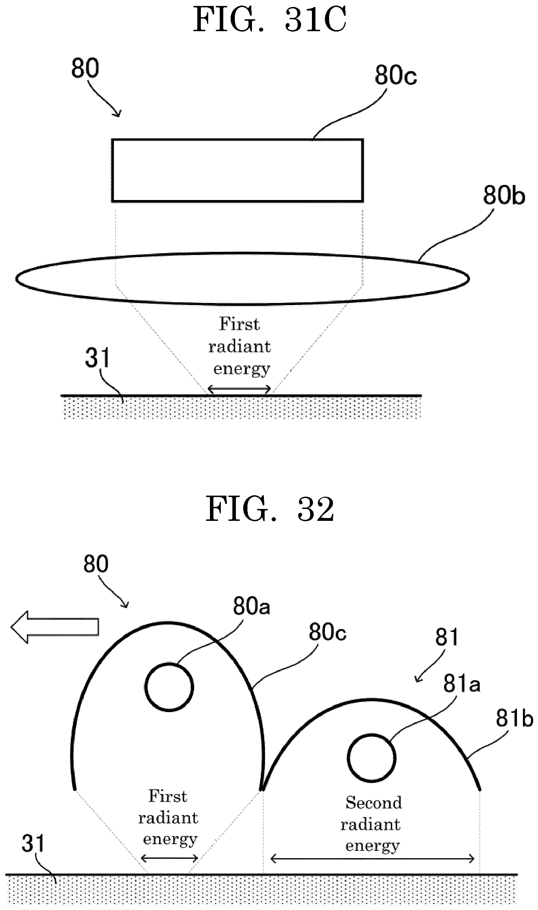

In terms of converging radiant energy obtained from one radiant energy source, energy from a light source 80c may be converged by a lens 80b as illustrated in FIG. 31C.

### (Embodiment 2-7)

In the embodiment 2-7, reflectors with different curvatures as illustrated in FIG. 31A and FIG. 31B of the embodiment 2-6 are combined, to constitute a first radiant energy source and a second radiant energy source. Specifically, in the embodiment 2-7, a first radiant energy source 80 and a second radiant energy source 81 are built as illustrated in FIG. 32.

### (Embodiment 2-8)

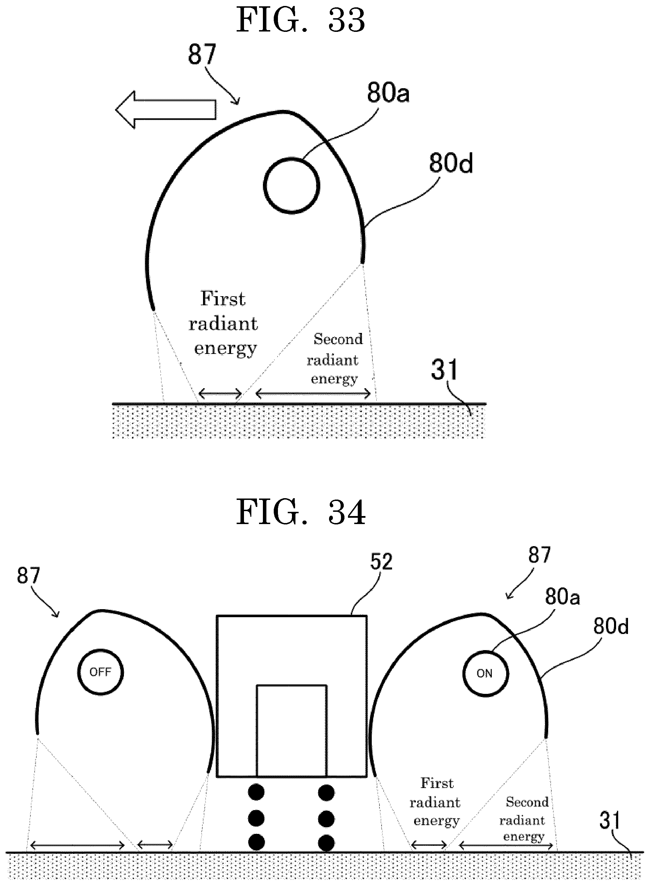

In the embodiment 2-8, a radiant energy source 87 includes one reflector 80d having a partially varied curvature as illustrated in FIG. 33, to enable applying both of a first radiant energy and a second radiant energy to a powder layer 31 using only one light source 80a.

Hence, the embodiment 2-8 is advantageous because the radiant energy source can be made smaller in size.

### (Embodiment 2-9)

In the embodiment 2-9, the radiant energy source 87 of the embodiment 2-8 is integrated with a head 52 as illustrated in FIG. 34. Specifically, two radiant energy sources 87 are integrated with the head 52, being disposed on both sides of the head 52 in a manner that both reflectors 80d face each other by surfaces having a smaller curvature.

Hence, in the embodiment 2-9, the number of parts can be reduced from the integrated structure of the head and the radiant energy sources illustrated in FIG. 26, and the apparatus can also be made smaller in size.

### (Embodiment 2-10)

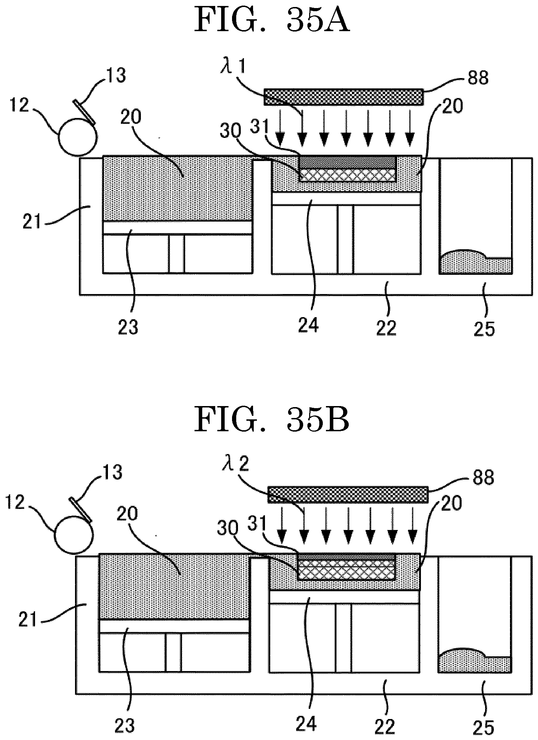

In the embodiment 2-10, the first radiant energy and the second radiant energy are applied with different wavelengths respectively, unlike the radiant energy source 86 of the embodiment 2-4 illustrated in FIG. 29A and FIG. 29B. Specifically, as illustrated in FIG. 35A, when applying the first radiant energy to a powder layer 31, a radiant energy source 88 applies radiant energy having a wavelength λ1 to the powder layer 31. When applying the second radiant energy to the powder layer 31, the radiant energy source 88 applies energy having a wavelength λ2 longer than the wavelength λ1 to the powder layer 31.

Hence, in the embodiment 2-10, the first radiant energy having the wavelength λ1 shorter than the wavelength λ2 is used to heat the entire powder layer 31. Next, the second radiant energy having the wavelength λ2 longer than the wavelength λ1 is used to heat the external surface side of the powder layer 31. Radiant energy having a long wavelength is suitable to heat the external surface side of the powder layer 31, because such radiant energy stays within the external surface side (incident side) of the powder layer 31.

Hence, in the embodiment 2-10, it is possible to select whether to heat the entire powder layer 31 or to heat the external surface side of the powder layer 31 only by varying the wavelength of the energy, unlike in the other embodiments in which the energy density is varied.

The method for setting the wavelengths λ1 and λ2 is not particularly limited, may be appropriately selected depending on the intended purpose, and may be as follows.

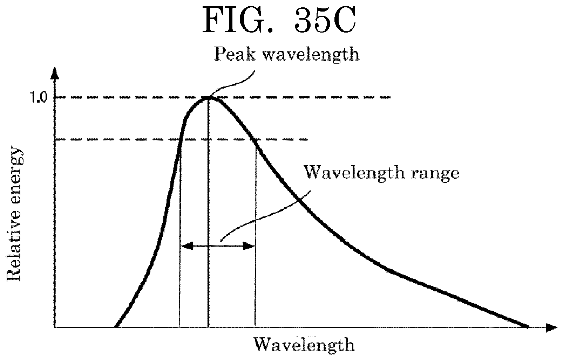

For example, as plotted in FIG. 35C, when there is a peak wavelength at which a powder layer 31 containing the absorbent most efficiently converts applied energy to heat, relative energy at the peak wavelength is assumed to be 1. In this case, a shorter wavelength range at relative energy of, for example, 0.8 may be λ1, and a longer wavelength range at the relative energy of 0.8 may be λ2.

As described above, the three-dimensional object producing apparatus of the present disclosure includes a powder layer forming unit configured to form a powder layer, a radiant energy absorbent applying unit configured to apply a radiant energy absorbent over the powder layer, and a radiant energy applying unit configured to apply a first radiant energy having a first energy density to the powder layer over which the radiant energy absorbent is applied, and subsequently apply a second radiant energy having a second energy density lower than the first energy density to the powder layer.

Hence, by applying the second radiant energy, the three-dimensional object producing apparatus of the present disclosure is configured to compensate for heat dissipation from the upper surface side of the powder layer during temperature lowering, and make the degree of heat dissipation from the lower surface side meet, to reduce temperature variation within the powder layer. In this way, the three-dimensional object producing apparatus of the present disclosure can prevent each powder layer from warping, and suppress occurrence of warpage in a three-dimensional object.

### (Energy radiation program for producing three-dimensional object)

An energy radiation program for producing a three-dimensional object of the present disclosure causes a computer to execute a process including applying a first radiant energy having a first energy density to a powder layer to which a radiant energy absorbent is applied, and subsequently applying a second radiant energy having a second energy density lower than the first energy density.

The energy radiation program for producing a three-dimensional object of the present disclosure is suitably executed for carrying out the three-dimensional object producing method of the present disclosure.

That is, the energy radiation program for producing a three-dimensional object of the present disclosure can carry out the three-dimensional object producing method of the present disclosure with the use of, for example, computers as hardware resources. The energy radiation program for producing a three-dimensional object of the present disclosure may be executed by at least any of one or a plurality of computer(s) and server(s) .

The procedure of the energy radiation program for producing a three-dimensional object of the present disclosure may be performed by, for example, the three-dimensional object producing apparatus illustrated in FIG. 1 to FIG. 5A to FIG. 5F.

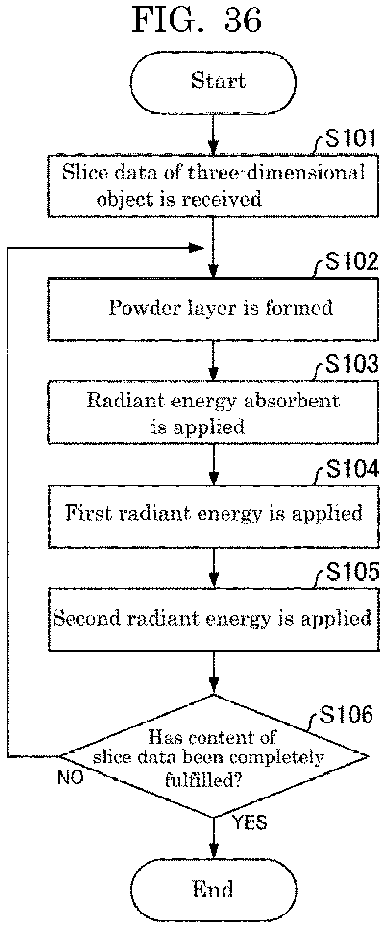

FIG. 36 is a flowchart illustrating an example procedure of an energy radiation program for producing a three-dimensional object of the present disclosure. The procedure of the energy radiation program for producing a three-dimensional object of the present disclosure will be described with reference to FIG. 36 and FIG. 4.

In the step S101, an external I/F 506 receives irradiation data correlated with slice data of a three-dimensional object from the object formation data generating apparatus 600, and moves the flow to S102.

In the step S102, the main controlling section 500A causes the motor driving units 515 and 516 to drive the motors 553 and 26, to form a powder layer 31, and moves the flow to S103.

In the step S103, the main controlling section 500A causes the head drive controlling section 508 to drive the heads 52 to cause the radiant energy absorbent applying unit to discharge the object forming liquid containing the radiant energy absorbent to the powder layer 31 based on the slice data, and moves the flow to S104.

In the step S104, the main controlling section 500A causes the head drive controlling section 508 to drive the heads 52 to cause the first radiant energy source 80 mounted on the heads 52 to apply the first radiant energy to the powder layer 31 based on the slice data, and moves the flow to S105.

In the step S105, the main controlling section 500A causes the head drive controlling section 508 to drive the heads 52 to cause the second radiant energy source 81 mounted on the heads 52 to apply the second radiant energy to the powder layer 31 based on the slice data, and moves the flow to S106.

In the step S106, the main controlling section 500A determines whether the content of the slice data has been completely fulfilled. When it is determined that the content of the slice data has been completely fulfilled, the main controlling section 500A terminates the flow. When it is determined that the content of the slice data has not been completely fulfilled, the main controlling section 500A moves the flow to S102.

In this way, the energy radiation program for producing a three-dimensional object of the present disclosure causes a computer to execute a process including applying a first radiant energy having a first energy density to a powder layer to which a radiant energy absorbent is applied, and subsequently applying a second radiant energy having a second energy density lower than the first energy density.

Aspects of the present disclosure are, for example, as follows.
<1-1> A three-dimensional object producing apparatus including:
   a powder layer forming unit configured to form a powder layer;
   a radiant energy absorbent applying unit configured to apply a radiant energy absorbent over the powder layer; and
   a radiant energy applying unit configured to apply radiant energy having an energy density of 0.1 W/mm² or higher to the powder layer over which the radiant energy absorbent is applied.
<1-2> The three-dimensional object producing apparatus according to <1-1>,
   wherein the energy density is 0.3 W/mm² or higher.
<1-3> The three-dimensional object producing apparatus according to <1-1> or <1-2>,
   wherein the radiant energy applying unit is a light irradiation unit.
<1-4> The three-dimensional object producing apparatus according to <1-3>,
   wherein the light irradiation unit includes a light source and a reflector configured to reflect light emitted by the light source.
<1-5> The three-dimensional object producing apparatus according to <1-4>,
   wherein the reflector is capable of reflecting the light emitted by the light source in one direction.
<1-6> The three-dimensional object producing apparatus according to <1-4> or <1-5>,
   wherein the light source is a spherical lamp,
   wherein the reflector has an approximately dome-like shape having an opening at one end, and
   wherein the spherical lamp is provided within a region of the opening.
<1-7> The three-dimensional object producing apparatus according to <1-6>,
   wherein the light emitted by the spherical lamp is applied to the powder layer over which the radiant energy absorbent is applied, in a manner that an area to be irradiated with the light within the powder layer is smaller than an area of the opening of the reflector having the approximately dome-like shape.
<1-8> The three-dimensional object producing apparatus according to <1-4> or <1-5>,
   wherein the light source is a rod lamp,
   wherein the reflector has an opening at one end, and a peak at a position opposite to the opening, the opening having a shape of approximately a rectangular parallelepiped, the peak being parallel with a longer dimension of the rectangular parallelepiped, a cross-sectional shape of the reflector in a direction orthogonal to the loner dimension being the approximately dome-like shape, and
   wherein the rod lamp is provided within a region of the opening.
<1-9> The three-dimensional object producing apparatus according to <1-8>,
   wherein the light emitted by the rod lamp is applied to the powder layer over which the radiant energy absorbent is applied, in a manner that an area to be irradiated with the light within the powder layer is smaller than an area of the opening of the reflector of which cross-sectional shape in the direction orthogonal to the longer dimension is the approximately dome-like shape.
<1-10> The three-dimensional object producing apparatus according to any one of <1-1> to <1-9>,
   wherein a material used in the powder layer has a melting point of 200 degrees C or higher.
<1-11> The three-dimensional object producing apparatus according to any one of <1-1> to <1-10>,
   wherein a material used in the powder material is selected from the group consisting of ABS, PC, PMMA, PS, PEEK, PTFE, PAI, PEI, PES, PSU, PEK, PAEK, PEKK, PEEKK, and PEKEKK.
<1-12> A three-dimensional object producing method including:
   forming a powder layer;
   applying a radiant energy absorbent over the powder layer; and
   applying radiant energy having an energy density of 0.1 W/mm² or higher to the powder layer over which the radiant energy absorbent is applied.
<2-1> A three-dimensional object producing apparatus including:
   a powder layer forming unit configured to form a powder layer;
   a radiant energy absorbent applying unit configured to apply a radiant energy absorbent over the powder layer; and
   a radiant energy applying unit configured to apply a first radiant energy having a first energy density to the powder layer over which the radiant energy absorbent is applied, and subsequently apply a second radiant energy having a second energy density lower than the first energy density.
<2-2> The three-dimensional object producing apparatus according to <2-1>,
   wherein when the first energy density is X (W/mm²), the second energy density is 0.015X or greater but 0.750X or less.
<2-3> The three-dimensional object producing apparatus according to <2-1> or <2-2>,
   wherein the second energy density is set based on specific heat of a material of the powder layer.
<2-4> The three-dimensional object producing apparatus according to any one of <2-1> or <2-3>,
   wherein the second energy density is capable of maintaining a material of the powder layer at a temperature higher than a melting point of the material of the powder layer.
<2-5> The three-dimensional object producing apparatus according to any one of <2-1> or <2-4>,
   wherein the radiant energy applying unit is a light irradiation unit.
<2-6> The three-dimensional object producing apparatus according to <2-5>,
   wherein the light irradiation unit includes a light source and a reflector configured to reflect light emitted by the light source.
<2-7> The three-dimensional object producing apparatus according to <2-6>,
   wherein the reflector is capable of reflecting the light emitted by the light source in a certain direction.
<2-8> The three-dimensional object producing apparatus according to <2-6> or <2-7>,
   wherein the reflector condenses light to two or more light condensing regions,
   wherein one of the light condensing regions has a smaller area than another one of the light condensing regions, and
   wherein the one light condensing region is a region to which the first radiant energy is applied and the another light condensing region is a region to which the second radiant energy is applied.
<2-9> The three-dimensional object producing apparatus according to any one of <2-1> to <2-5>,
   wherein the radiant energy applying unit includes a first radiant energy source configured to apply the first radiant energy having the first energy density and a second radiant energy source configured to apply the second radiant energy having the second energy density lower than the first energy density.
<2-10> The three-dimensional object producing apparatus according to <2-9>,
   wherein the radiant energy applying unit includes the first radiant energy source and the second radiant energy source in order of mentioning in a scanning direction of the radiant energy applying unit.
<2-11> The three-dimensional object producing apparatus according to <2-9>,
   wherein the radiant energy applying unit includes the first radiant energy source, the second radiant energy source, and the first radiant energy source in order of mentioning in a scanning direction of the radiant energy applying unit, and is capable of performing scanning toward one side in the scanning direction and scanning toward a side opposite to the one side.
<2-12> The three-dimensional object producing apparatus according to <2-9>,
   wherein the radiant energy applying unit includes the first radiant energy source, the second radiant energy source, the second radiant energy source, and the first radiant energy source in order of mentioning in a scanning direction of the radiant energy applying unit,
   wherein the radiant energy absorbent applying unit is provided between the two second radiant energy sources, and
   wherein the radiant energy applying unit is capable of performing scanning toward one side in the scanning direction and scanning toward a side opposite to the one side.
<2-13> A three-dimensional object producing method including:
   forming a powder layer;
   applying a radiant energy absorbent over the powder layer; and
   applying a first radiant energy having a first energy density to the powder layer over which the radiant energy absorbent is applied, and subsequently applying a second radiant energy having a second energy density lower than the first energy density.
<2-14> The three-dimensional object producing method according to <2-13>,
   wherein when the first energy density is X (W/mm²), the second energy density is 0.015X or greater but 0.750X or less.

The three-dimensional object producing apparatus according to any one of <1-1> to <1-11> and <2-1> to <2-12> and the three-dimensional object producing method according to any one of <1-12>, and <2-13> and <2-14> can solve the various problems in the related art and achieve the object of the present disclosure.

## Claims

1. A three-dimensional object producing apparatus comprising:
a powder layer forming unit configured to form a powder layer;
a radiant energy absorbent applying unit configured to apply a radiant energy absorbent over the powder layer; and
a radiant energy applying unit configured to apply radiant energy to the powder layer over which the radiant energy absorbent is applied.

2. The three-dimensional object producing apparatus according to claim 1,
wherein an energy density of the radiant energy is 0.1 W/mm² or higher.

3. The three-dimensional object producing apparatus according to claim 2,
wherein the energy density of the radiant energy is 0.3 W/mm² or higher.

4. The three-dimensional object producing apparatus according to claim 1,
wherein the radiant energy applying unit applies a first radiant energy having a first energy density to the powder layer, and subsequently applies a second radiant energy having a second energy density lower than the first energy density to the powder layer.

5. The three-dimensional object producing apparatus according to claim 4,
wherein when the first energy density is X (W/mm²), the second energy density is 0.015X or greater but 0.750X or less.

6. The three-dimensional object producing apparatus according to claim 4 or 5,
wherein the second energy density is set based on specific heat of a material of the powder layer.

7. The three-dimensional object producing apparatus according to any one of claims 4 to 6,
wherein the second energy density is capable of maintaining a material of the powder layer at a temperature higher than a melting point of the material of the powder layer.

8. The three-dimensional object producing apparatus according to any one of claims 1 to 7,
wherein the radiant energy applying unit is a light irradiation unit.

9. The three-dimensional object producing apparatus according to claim 8,
wherein the light irradiation unit includes a light source and a reflector configured to reflect light emitted by the light source.

10. The three-dimensional object producing apparatus according to claim 9,
wherein the reflector is capable of reflecting the light emitted by the light source in a certain direction.

11. The three-dimensional object producing apparatus according to claim 9 or 10,
wherein the light source is a spherical lamp,
wherein the reflector has an approximately dome-like shape having an opening at one end, and
wherein the spherical lamp is provided within a region of the opening.

12. The three-dimensional object producing apparatus according to claim 11,
wherein the light emitted by the spherical lamp is applied to a region of the powder layer over which the radiant energy absorbent is applied, the region having an area smaller than an area of the opening of the reflector having the approximately dome-like shape.

13. The three-dimensional object producing apparatus according to any one of claims 4 to 7,
wherein the radiant energy applying unit is a light irradiation unit,
wherein the light irradiation unit includes a light source and a reflector configured to reflect light emitted by the light source,
wherein the reflector is capable of reflecting the light emitted by the light source in a certain direction,
wherein the reflector condenses light to two or more light condensing regions,
wherein one of the light condensing regions has a smaller area than another one of the light condensing regions,
wherein the one light condensing region is a region to which the first radiant energy is applied, and
wherein the another light condensing region is a region to which the second radiant energy is applied.

14. The three-dimensional object producing apparatus according to any one of claims 4 to 13,
wherein the radiant energy applying unit includes a first radiant energy source configured to apply the first radiant energy having the first energy density and a second radiant energy source configured to apply the second radiant energy having the second energy density lower than the first energy density.

15. A three-dimensional object producing method comprising:
forming a powder layer;
applying a radiant energy absorbent over the powder layer; and
applying radiant energy to the powder layer over which the radiant energy absorbent is applied.
